# EUROPEAN PATENT SPECIFICATION

(11) **EP 4 062 694 B1**
(45) Date of publication and mention of the grant of the patent: **22.10.2025**
(21) Application number: 19832753.8
(22) Date of filing: 20.11.2019
(51) Int. Cl.: H04W 72/04

(54) **GROUP RNTI UPDATE AT BEAM CHANGE**
GRUPPEN-RNTI-AKTUALISIERUNG BEI STRAHLWECHSEL
MISE À JOUR DE RNTI DE GROUPE LORS DE CHANGEMENT DE FAISCEAU

(43) Date of publication of application: 28.09.2022
(73) Proprietor: Nokia Technologies Oy, 02610 Espoo (FI)
(72) Inventor: RAO, Anil, Redmond, WA 98052 (US); HUGL, Klaus, 1070 Wien (AT); BRAUN, Volker, 70435 Stuttgart (DE)
(74) Representative: Script Intellectual Property LLP
(86) International application number: PCT/US2019/062448
(87) International publication number: WO 2021/101538

(56) References cited:
- KR-A- 20190 054 978
- US-A1- 2018 199 328
- US-A1- 2019 215 119
- US-A1- 2019 313 476
- "5G; NR; Medium Access Control (MAC) protocol specification (3GPP TS 38.321 version 15.7.0 Release 15)", vol. 3GPP RAN, no. V15.7.0, 15 October 2019 (2019-10-15), pages 1 - 80, XP014356037, Retrieved from the Internet <URL:http://www.etsi.org/deliver/etsi_ts/138300_138399/138321/15.07.00_60/ts_138321v150700p.pdf> [retrieved on 20191015]

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for group common signaling operations.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR may provide bitrates on the order of 10-20 Gbit/s or higher, and may support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.

KR 20190054978A discloses a base station of a wireless communication system, capable of efficiently transmitting data in the wireless communication system. The base station of a wireless communication system comprises a communication module and a processor. The processor receives a radio resource control (RRC) signal from the base station of the wireless communication system through a communication module, acquires information about at least one transmission configuration indicator (TCI) state from the RRC signal, receives a physical downlink data channel including a media access control-control element (MAC-CE) from the base station of the wireless communication system through the communication module, and sets at least one beam parameter value for receiving a physical downlink control channel (PDCCH) in accordance with the TCI state indicated by the MAC-CE to receive the PDCCH.

### SUMMARY

The invention is set out by the appended claims.

### BRIEF DESCRIPTION OF THE DRAWINGS:

For proper understanding of example embodiments, reference should be made to the accompanying drawings, wherein:
Fig. 1 illustrates example structures of medium access control control elements (MAC CEs);
Fig. 2 illustrates an example structure of a MAC CE;
Fig. 3 illustrates an example signal diagram of using one or more MAC CEs described herein to update group common power control parameters;
Fig. 4 illustrates example transmissions to different groups of user equipment (UEs);
Fig. 5 illustrates an example transmission configuration indicator (TCI) state list;
Fig. 6 illustrates an example signal diagram of using one or more group radio network temporary identifier (RNTI) per TCI index as part of a TCI state list;
Fig. 7 illustrates an example flow diagram of a method, according to some embodiments;
Fig. 8 illustrates an example flow diagram of a method, according to some embodiments;
Fig. 9 illustrates an example flow diagram of a method, according to some embodiments;
Fig. 10 illustrates an example flow diagram of a method, according to some embodiments;
Fig. 11 illustrates an example flow diagram of a method, according to some embodiments;
Fig. 12 illustrates an example flow diagram of a method, according to some embodiments;
Fig. 13a illustrates an example block diagram of an apparatus, according to an embodiment; and
Fig. 13b illustrates an example block diagram of an apparatus, according to another embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for group common signaling operations is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or operations discussed below may be performed in a different order and/or concurrently with each other. Furthermore, if desired, one or more of the described functions or operations may be optional or may be combined. As such, the following description should be considered as merely illustrative of the principles and teachings of certain example embodiments, and not in limitation thereof.

Use of millimeter wave (mmWave) spectrum may involve use of large scale antenna arrays with beamforming to overcome propagation characteristics of mmWave signals and to obtain sufficient cell coverage. For this reason, the 5G NR may be designed around the concept of having a beam-based air interface design, where there may be inherent support for beamforming physical layer signals, both data and control. Due to the large number of antenna elements typically required for reasonable performance at mmWave frequencies, possibly 256 antenna elements or more, 5G NR may utilize analog beamforming front-ends to keep the transceiver cost/complexity reasonable. This means that in each scheduling instance, only a single beam direction may be scheduled at a time.

With respect to a first set of scenarios, group common DCIs may be used for physical uplink shared channel (PUSCH)/physical uplink control channel (PUCCH) power control (e.g., DCI format 2_2) and sounding reference signal (SRS) power control (e.g., DCI format 2_3) signaling for multiple, or a group of, UEs. In addition, group common DCIs may be used for notifying a group of UEs of a slot format change in a cell (e.g., DCI format 2_0). In each of these cases, a UE may be configured with a special group radio network temporary identifier (RNTI) in a *PhysicalCellGroupConfig* information element (IE) as part of a radio resource control (RRC) connection establishment procedure. There may be a separate group RNTI for each of the group common DCI formats, such as, for example, a transmit power control (TPC) PUSCH RNTI (TPC-PUSCH-RNTI) for DCI format 2_2, a TPC SRS RNTI (TPC-SRS-RNTI) for DCI format 2_3, and a slot format indication RNTI (SFI-RNTI) for DCI format 2_0.

In addition, for certain DCI formats, such as formats 2_2 and 2_3, which allow for addressing specific UEs within a group, there may be specific indices configured for a UE. For example, a tpc-Index may be configured in a *PUSCH-TPC-CommandConfig* IE for a DCI_format 2_2 to identify the PUSCH TPC command associated with a UE when power controlling the PUSCH for a group of users. Similarly, a tpc-Index may be configured in the *PUCCH-TPC-CommandConfig* IE when using a DCI format 2_2 when power controlling the PUCCH for a group of UEs. Further, a *SRS-TPC-CommandConfig* may contain UE-specific indices for use with DCI format 2_3 for SRS power control.

One advantage of using group common DCIs is that a single physical downlink control channel (PDCCH) message carrying this DCI may convey information to a large group of UEs, which may eliminate having to send a separate unicast PDCCH carrying a DCI for each individual UE. For changing a slot format in a cell with DCI format 2_0, it may be desirable to notify the UEs in a cell of the slot format change with a single command, where no individual UE addressing has to be used.

For the PUSCH/PUCCH power control DCI (format 2_2) and the SRS power control DCI (format 2_3), sending one command that may convey individual/UE-specific power control commands for a group of UEs may be desirable. Some prior implementations may allow a maximum of up to 15 such TPC commands together in a block to be carried in a single DCI, where the actual maximum number of individual TPC commands N addressable by group common DCI (GC-DCI) may be dependent on physical resource blocks (PRBs) in a bandwidth part (BWP), as well as on a field size used for each individual TPC command (e.g., 2 or 3 bits).

The way a UE in a group may determine which of the TPC commands is intended for it is by an RRC configuration of its tpc-Index. This may allow the UE to determine which bit positions contain the command for that UE. As a maximum of *N* users can be addressed in the group (if having only a single TPC information block per UE), a typical gNB implementation may include assigning no more than *N* UEs to the same group common RNTI (i.e., no more than *N* users may have the same TPC-PUSCH-RNTI). If there are more than *N* users for which we desire to utilize the group common DCI, then the gNB may configure and maintain multiple group common RNTIs and may send the information to UEs upon RRC connection establishment by signaling the group RNTI values to use in the *PhysicalCellGroupConfig* IE.

From the UE's point of view, it may be configured with a single group RNTI for a specific purpose. For example it may have one TPC-PUSCH-RNTI, one TPC-PUCCH-RNTI, and one TPC-SRS-RNTI, and the UE may belong to one group for each of these. But the UE may be configured with more than one tpc-Index for a certain GC-DCI format. For example, for SRS TPC, it may be possible to configure different tpc-Indexes for different uplink (UL) serving cells, further reducing the number of UEs that can be served by a single DCI (i.e., less than N users are to be allocated with the same TPC-SRS-RNTI). From the gNB perspective, it may be maintaining multiple groups, and hence multiple TPC-PUSCH-RNTIs, multiple TPC-PUCCH-RNTIs, and multiple TPC-SRS-RNTIs, as there may be at most N users per group RNTI for a specific purpose.

For example, for a group common PUSCH power control, where the gNB configures K different TPC-PUSCH-RNTI values, there may be up to N different UEs assigned to each TPC-PUSCH-RNTI value (each TPC-PUSCH-RNTI group may have a different number of users in the group). Upon RRC connection establishment a UE may receive its TPC-PUSCH-RNTI value along with its tpc-Index value so that it may determine which TPC bits in the group are intended for it.

When trying to use the group common DCI format 2_2 (PUSCH or PUCCH power control) or DCI format 2_3 (SRS power control) in a mmWave system that uses analog beamforming, an issue arises regarding inefficient transmission where many TPC commands may be sent on beams which cannot reach the intended UE. As a result, the group common DCI may have to be transmitted on multiple beams in different time slots in order to reach the intended UEs, which may result in high overhead when a large number of UEs are connected.

As one example, consider a system with a large number of connected UEs, such as in an Industrial IoT (IIoT) setting where there may be, for example, 300 connected devices operating in a large amount of mmWave spectrum. As each group common DCI for power control can address a maximum of N<=15 UEs, this means more than 20 different groups may have to be formed, with each having a different group RNTI (i.e., >20 different TPC-PUSCH-RNTI values for the PUSCH power control use case). In such an example system there may be 64 synchronization signal and physical broadcast channel block (SSB) beams configured (the maximum allowed for mmWave). The user groups may only be formed at RRC connection setup, but UEs may be moving throughout their data sessions and may migrate to any of the beams. In some cases, one of the group RNTIs hosting *N* users may have the users allocated across *N* beams. This means that when the group DCI is transmitted for power control on one beam, in some cases, it is reaching only one UE in the group when it is transmitted on that beam, and would need to be transmitted on *N* different beams to reach the UEs in the group. Thus, in the example including 300 UEs, there may need to be 300 group common PDCCH transmissions of the DCI to reach all 300 connected UEs, which may result in no savings from having the group common signalling of TPC commands.

Thus, certain problems may arise because of UE mobility, despite UEs in a group starting out on the same beam with assignment of group RNTIs at RRC connection establishment based on the initial serving beam. Different UEs may move to different beams, and eventually, the group common DCI for power control, when transmitted on a particular beam, may have TPC bits for many UEs that are wasted due to not reaching the intended UE(s). The group common DCI for TPC may need to be transmitted on several other beams to have the TPC commands in the group reach the intended UEs.

One prior attempt at solving these problems may be directed to forming the user groups for the group common DCI according to which beam the UE is connected. That is, if UEs that are associated with a specific beam are assigned the same group RNTI, then the group common DCI may be transmitted just once on the intended beam to reach the UEs in the group (assuming the UEs use that same beam).

This may be done upon RRC connection establishment, where it is known which beam a UE uses because of the implicit association that exists between a physical random access channel (PRACH) occasion the UE selects for transmitting its PRACH signal and an SSB beam index. The gNB may maintain a list of K group RNTIs corresponding to the K SSB beams configured in the system. UEs that connect to a particular beam index may be assigned the same group RNTI value for their TPC-PUSCH-RNTI, TPC-PUCCH-RNTI, and TPC-SRS-RNTI in the *PhysicalCellGroupConfig* IE (if they connect to the same beam) to save DCI overhead (e.g., waste of downlink (DL) control resources).

One potential issue with this attempted solution is that when UEs move within a cell, they may perform a beam management procedure where the UE may perform reference signal received power (RSRP) measurements on a number beams and may report these measurements to the gNB, as configured via the *CSI-ReportConfig* IE. Based on these measurements, the gNB may choose to change the serving beam of the UE by sending a MAC CE indicating a PDCCH TCI state indication. Note that this beam management procedure may operate at Layer 2 in a protocol stack, so that a network may quickly track the UE as it moves through the cell and so that the network may ensure the UE is connected to the most appropriate (i.e., strongest) beam (to maintain coverage and optimum performance throughout the cell area). As this is a Layer-2 message, it may terminate at a MAC layer and may only be involved the physical layer (PHY) and MAC layers of the protocol stack.

While the beam management procedure may be a Layer 2 procedure to maintain fast beam tracking, if the network wants to update a UE's group RNTI value, such as a TPC-PUSCH-RNTI, a TPC-PUCCH-RNTI, or a TPC-SRS-RNTI, along with the associated tpc-Index value(s), when the UE is switched to a new beam, a much slower Layer-3 procedure may be initiated. This may involve a Layer-3 RRC reconfiguration message from the gNB to the UE followed by Layer-3 RRC reconfiguration complete message from the UE to the gNB. As these are Layer-3 messages, the full protocol stack of PHY, MAC, radio link control (RLC), and packet data convergence protocol (PDCP) may be involved for the intended change of RNTIs and tpc-Indexes. Specifically, the RRC reconfiguration may be used to indicate the new TPC-PUSCH-RNTI, the new TPC-PUCCH-RNTI, and the new TPC-SRS-RNTI values in the *PhysicalCellGroupConfig* IE, as well possibly new tpc-Index values for PUSCH and PUCCH as part of the *PUSCH-TPC-CommandConfig* and *PUCCH- TPC-CommandConfig* IEs.

As the Layer-3 RRC reconfiguration may be a slower process (i.e., usually measured in hundreds of milliseconds) than the Layer-2 beam management procedure (i.e., usually performed in tens of milliseconds), a situation may arise where the serving beam may have to be changed at a fast rate to track the UE moving through the cell (i.e., where it is not possible for the slower and more detailed Layer-3 RRC reconfiguration procedure to keep up with updating the group RNTI values). This may result in a situation where the serving beam updates and the group common RNTI updates may not be synchronized, and the inefficiency/waste of computing and/or network resources described above may not be solved.

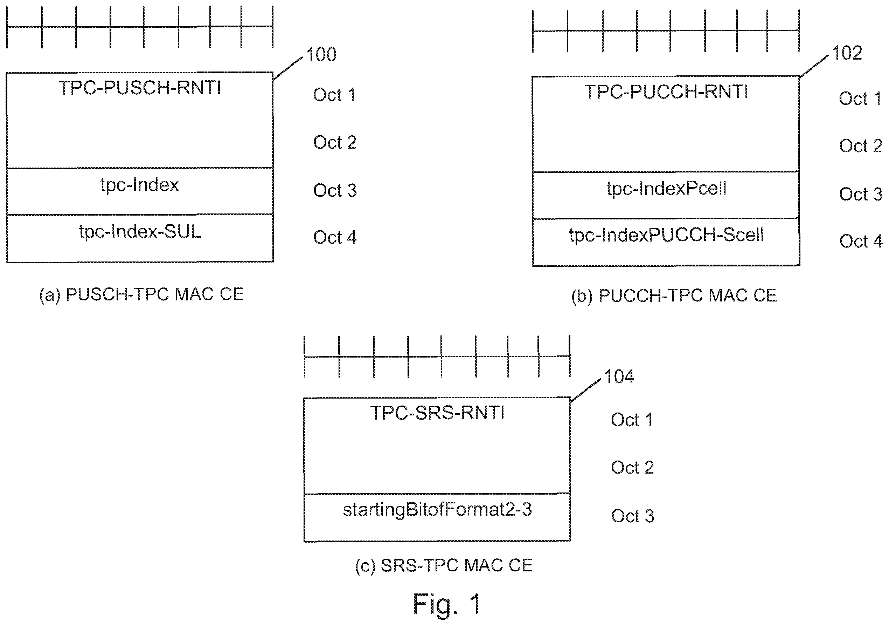

Some embodiments described herein provide for a Layer-2 mechanism to update group common RNTIs using a MAC CE that carries updated group RNTIs and corresponding updated TPC-Index values to be used by a UE, as illustrated in, and described with respect to, for example, Figs. 1-4 below. For example, a network node (e.g., a gNB) may transmit a MAC CE to the UE based on a change in a serving beam for the UE, where the MAC CE may include the updated group RNTIs and the updated TPC indexes. The UE may determine to use an updated group RNTI and a corresponding updated TPC index, and may transmit an indication to the network node that the updated group RNTI and the TPC index are in use.

As such, certain embodiments useful for understanding the invention described herein may be related to the group common power control feature in a mmWave 5G NR system. Certain embodiments may address group common signaling, which also may require a user-specific index within the group to be specified. Such may be the case for the group common DCI formats (e.g., DCI format 2_2 (PUSCH and PUCCH group common power control) and DCI format 2_3 (SRS group common power control)). Because of both the group RNTI (to identify the group to which the UE belongs) and a user-specific identifier (to identify which bit positions correspond to a specific users information within the group common command), certain embodiments useful for understanding the invention may maintain alignment between the groups and the set of users connected to a particular beam by using Layer-2 signaling via a MAC CE to signal both the change in group RNTI and the user-specific index each time a UE moves to a new beam.

For each of the analog beams, a different group RNTI value may be used. Each time a UE either initially attaches to a given analog beam or, because of mobility, is switched a particular analog beam, the Layer-2 MAC CE described herein may be sent to that UE, where the MAC CE may include the group RNTI value corresponding to that analog beam. Depending on which UE-specific indices are already allocated on this particular group RNTI, a UE-specific index may be assigned to this UE as well when it connects to this analog beam.

While some embodiments useful for understanding the invention are described in the context of PUSCH, PUCCH, and SRS power control, the concept of introducing a Layer-2 mechanism to update group RNTI values and associated indexing used by group common DCI formats may be applicable to other group RNTIs and/or group common DCI formats, such as, for example, format 2_1 with INT-RNTI for the pre-emption indication, or DCI format 2_0 for the slot format indication (e.g., which may use SFI-RNTI (e.g., in cases where it may be desirable to use different slot formats for different beams).

One possible advantage of certain embodiments useful for understanding the invention is that the MAC CE used may be sent at the same time as the MAC CE that is indicating a beam change for a UE, as MAC CEs may be multiplexed together in the same transmission. As a result, the group RNTI values and TPC-Index values may be updated each time the UE's serving beam is changed by the network. This may reduce or eliminate the need for use of the more elaborate and slower Layer-3 RRC reconfiguration procedure, which may not be capable of being perform as fast as the Layer-2 beam tracking framework.

With respect to a second set of scenarios to which certain embodiments useful for understanding the invention described herein are directed, UEs may be connected to a particular beam in a mmWave system. A layer 3 beam management procedure may involve the UE being configured upon RRC connection establishment with a TCI state list configuration. This may be provided by a tci-StatesPDCCH-ToAddList variable in a *ControlResourceSet* IE, which may be part of the *PDCCH-Config* IE that may be part of the overall RRC reconfiguration message that may be sent during the RRC connection establishment procedure when the UE changes from an RRC IDLE state to an RRC CONNECTED state.

The tci-StatesPDCCH-ToAddList variable may be conceptualized as a table, where each row of the table may be a configured TCI state, described by a *TCI-State* IE, which may associate a quasi co-location (QCL) type, a reference signal type, and an index (e.g., that may map to a particular beam, as each beam may have a different reference signal index). For example, different SSBs may be transmitted on different beams and may be identified by a SSB-Index. The TCI index may be the element index in the tci-StatesPDCCH-ToAddList variable.

While in an RRC connected state, a UE may perform RSRP measurements on a number of beams and may report these measurements to a gNB as configured via a *CSI-ReportConfig* IE. Based on these measurements the gNB may choose to change the serving beam of the UE by sending a MAC CE indicating a PDCCH TCI state indication. This MAC CE may indicate to the UE the TCI index in the TCI state list configuration stored in the RRC configured variable tci-StatesPDCCH-ToAddList.

After the UE acknowledges the reception of this MAC CE, it may then listen for PDCCH scheduling grants on the beam corresponding to the reference signal index provided in the TCI state list. This beam management procedure may be performed at Layer 2 in the protocol stack so that the network may quickly track the UE as it moves through the cell and so that the network may ensure it is connected to the most appropriate (i.e., strongest) beam to maintain coverage and optimum performance throughout the cell area. As this is a Layer-2 message, it may terminate at the MAC layer and may only involve the PHY and MAC layers of the protocol stack.

Group common DCIs may be used for notifying a group of UEs of a slot format change in a cell (DCI format 2_0), notifying a UE of certain time/frequency resources being pre-empted by other transmissions (DCI Format 2_1), PUSCH/PUCCH power control (DCI format 2_2) and SRS power control (DCI format 2_3) signaling for multiple/a group of UEs. In addition, additional group common DCIs may be used to improve URLLC performance.

In some embodiments useful for understanding the invention, a UE may be configured with a special group RNTI in a *PhysicalCellGroupConfig* IE as part of the RRC connection establishment procedure. There may be a separate group RNTI for each of the group common DCI formats, such as, for example, TPC-PUSCH-RNTI for DCI format 2_2, TPC-SRS-RNTI for DCI format 2_3, SFI-RNTI for DCI format 2_0, and INT-RNTI for DCI format 2_1.

One advantage of using group common DCIs is that a single PDCCH message carrying this DCI may convey information to a large group of UEs, rather than having to send a separate unicast PDCCH carrying a DCI for each individual UE. Some of the group common DCIs may additionally use per-UE indexing to address specific users within the group. This may be used for the PUSCH, the PUCCH, and the SRS power control (DCI formats 2_2 and format 2_3). Other group common DCIs may not specify any type of indexing or may not address specific users within the group. This may be true for the slot format indication (DCI format 2_0) and pre-emption indication (DCI format 2_1). In addition, the new group common DCI for uplink configured grant URLLC transmissions may not have to use per-UE indexing.

Currently, there does not exist any direct mechanism in which only users associated with a particular beam (i.e., TCI index) can be addressed in a group common fashion. There may be several use cases where it may be beneficial to address only those users associated with a particular beam. One example is the group common DCI for uplink configured grant (CG), where the goal may be to send a group common message to a set of UEs, where the group common message notifies the UE that they may transmit on their uplink CG resource in a given time instance.

As the UEs may transmit at the same time, it may be desirable to ensure that this message is only sent to UEs associated with the same analog beam in a mmWave system, as the gNB receiver can only receive on a single beam direction at time. Another example relates to enhancements to the CG mechanism as part of enhanced URLLC (eURLLC), where proposals include the use of MAC CEs that may be sent to reconfigure critical CG parameters that were previously only configurable via RRC signaling. These parameters may include the periodicity value and the timing offset for the CG resources.

In a mmWave system, it may be desirable for the timing offset, and in some cases, the periodicity, to be the same for UEs associated with a particular beam. The reason for this is that it may be desirable for UEs associated with a particular beam to transmit at the same time to efficiently make use of the fact that the gNB receiver may be listening on particular beam directions at certain time instances. It would be inefficient to have to send the same information to individual UEs. Instead, it would be desirable to have the ability to simultaneously address UEs associated with a particular beam at the same time, so that one MAC CE may be sent to the UEs on a particular beam to conserve air interface resources.

Another example may be the case of group common power control. While UEs in a group may start out on the same beam with assignment of group RNTIs at RRC connection establishment based on the initial serving beam, different UEs may move to different beams and, eventually, the group common DCI for power control, when transmitted on a particular beam, may have TPC bits for many UEs. The TPC bits may be wasted because they may not reach the intended UE(s), and the group common DCI for TPC may need to be transmitted on several other beams to finally have the TPC commands in the group reach the intended UEs.

One possible solution to the problem described above is to form the UE groups for the group common DCI according to which beam a UE is connected. That is, if UEs associated with a specific beam are assigned to the same group RNTI, then the group common DCI can be transmitted just once on the intended beam and the group common DCI may reach the UEs in the group since they are connected to the same beam.

The way this may be done currently is, upon RRC connection establishment, it is known which beam a UE is connected to because of the implicit association that exists between the PRACH occasion the UE selects for transmitting its PRACH signal and the SSB beam index. The gNB may maintain a list of K group RNTI values corresponding to the K SSB beams configured in the system. UEs that connect to a particular beam index may be assigned the same group RNTI value.

One issue includes that, when UEs move within the cell, they may perform the Layer-2 beam management procedure described above. While the beam management procedure is a Layer 2 procedure to maintain fast beam tracking, if the network wants to update the UE's group RNTI value, a slower Layer-3 procedure may have to be initiated. The Layer-3 procedure may involve a Layer-3 RRC reconfiguration message from the gNB to the UE followed by a Layer-3 RRC reconfiguration complete message from the UE to the gNB, similar to that described above. As these are Layer-3 messages, the full protocol stack of PHY, MAC, RLC, and PDCP may be involved for the intended change of RNTIs. Specifically, the RRC reconfiguration may have to indicate the new group RNTI values in the *PhysicalCellGroupConfig* IE.

Because the Layer-3 RRC reconfiguration may be a slower process than the Layer-2 beam management procedure, a situation may arise where the serving beam has to be changed at a fast rate to track the UE moving through the cell, where it may not be possible for the slower and more detailed layer-3 RRC reconfiguration procedure to keep up with updating the group RNTI values. Similar to that described above, this may result in a situation where the serving beam updates and the group common RNTI updates are not synchronized and the same problem described above may not be fully solved.

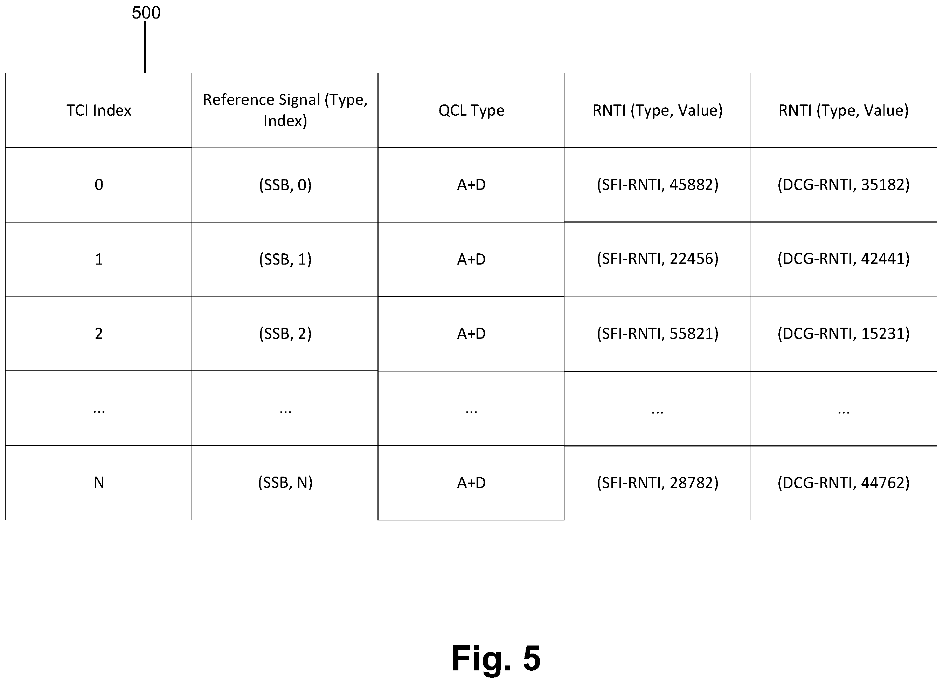

Some embodiments useful for understanding the invention described herein may provide for a group RNTI type and an associated RNTI value that can be configured per TCI index as part of the TCI state list configuration, as illustrated in, and described with respect to, for example, Figs. 5-6. The UE may operate such that when it receives a TCI state indication as part of a Layer-2 beam management procedure, the UE may reference the TCI state list configuration and may determine to use the group RNTI value configured for the associated TCI index while it is connected to a corresponding beam.

In this way, group RNTI values may be configured on a per-beam basis, which may address the problem of not being able to communicate with UEs in a group common fashion and only being able to communicate with UEs associated with a particular beam. In some embodiments, one or more different types of group RNTI types and associated RNTI values can be configured for different purposes, as illustrated in Figure 5 below (e.g., an SFI-RNTI and a dynamic configured grant (DCG)-RNTI may be configured per TCI index). Certain embodiments useful for understanding the invention may relate to a *TCI-State* IE definition. In addition, to a tci-StateID, a qcl-Type1, and qcl-Type2 fields, an additional optional field, which may be referred to herein as a group-RNTI-list, may be added where each element of the list may be of the type GroupRNTI, which may identify the type of group RNTI (e.g., SI-RNTI, DCG-RNTI, TPC-PUSCH-RNTI, or any other type of group RNTI) along with the value of the RNTI itself. In this case, for the TCI-State IE used with RRC, a list of group RNTIs may be specified that is associated with a particular TCI state.

Additionally, or alternatively, certain embodiments useful for understanding the invention may update MAC operations by updating one or more actions taken by the UE upon reception of a MAC CE for TCI state change when the UE is switched to a new beam as part of the beam management procedure. Here, the UE may replace the RRC configured group RNTI values (or any previously configured value by TCI state change) specified in the group-RNTI-list of the TCI state list configuration corresponding to the TCI index specified by the MAC CE for TCI state change. For example, if DCG-RNTI, TPC-PUSCH-RNTI, TPC-PUCCH-RNTI, and TPC-SRS-RNTI values are specified in the group-RNTI-list as the group-RNTI-type, then the UE may use the RNTI group-RNTI-value corresponding to each group-RNTI-type specified in the group-RNTI-list to replace any previously configured RNTI value for DCG-RNTI, TPC-PUSCH-RNTI, TPC-PUCCH-RNTI, and TPC-SRS-RNTI. In this way, a RNTI value used for the group common DCIs may change when the UE's serving beam is changed, as the UE may be listening for new RNTI values each time it is switched to a new beam. This may solve the problem of being able to address only UEs associated with a specific beam in a group common manner, even under mobility conditions, as UEs may be switching their serving beam quickly as part of the Layer-2 beam management procedure, as described above.

Certain embodiments useful for understanding the invention described herein may provide for a reduced signaling option. As described above, a separate RNTI value may be associated with each TCI index (e.g., with each beam). However, given that many beams may be completely non-overlapping, the signaling needed for certain embodiments useful for understanding the invention may be reduced by, instead, specifying only a set of R RNTI values which may be recycled and used to assign to different TCI indices. In this case, nearby beams that overlap with each other may have to have a different RNTI value, but beams far away may recycle previously assigned RNTI values, as there may be no ambiguity as to whether a RNTI value may be used to send a group common message on a particular beam that is distant from, or non-overlapping with, another beam using the same RNTI value. As an example, if there are R different RNTI values {RNTI(0), RNTI(1), .. RNTI(R-1)} that are signaled, the RNTI value used for TCI index k may be given by RNTI(k mod R), where mod is the modulo operation. Based on this for example, if we have 12 TCI indexes with index k=0, 1, 2, .. 11, and we specified R = 3 different RNTI values {RNTI(0), RNTI(1), RNTI(2)}, the RNTI value used for each TCI index may be as follows:
TCI index = 0, use RNTI(0 mod 3) = RNTI(0)
TCI index = 1, use RNTI(1 mod 3) = RNTI(1)
TCI index = 2, use RNTI(2 mod 3) = RNTI(2)
TCI index = 3, use RNTI(3 mod 3) = RNTI(0)
TCI index = 4, use RNTI(4 mod 3) = RNTI(1)
TCI index = 5, use RNTI(5 mod 3) = RNTI(2)
TCI index = 6, use RNTI(6 mod 3) = RNTI(0)
TCI index = 7, use RNTI(7 mod 3) = RNTI(1)
TCI index = 8, use RNTI(8 mod 3) = RNTI(2)
TCI index = 9, use RNTI(9 mod 3) = RNTI(0)
TCI index = 10, use RNTI(10 mod 3) = RNTI(1)
TCI index = 11, use RNTI(11 mod 3) = RNTI(2)

Assuming adjacent TCI indices correspond to adjacent beams, adjacent beams may not have the same RNTI value in this scheme. If more separation between beams is desired in terms of not recycling the same RNTI value, then a larger value of R may have to be used. In this case, the length of the GroupRNTI sequence may not be equal to the number of TCI states defined in the tci-StatesPDCCH-ToAddList. Rather, a reduced number of R values may have to be provided, and the UE may use the rule that the group RNTI value to use for TCI index k is equal to the GroupRNTI RNTI value index equal to k mod R.

For certain group common DCIs, such as DCI format 2_2 and DCI format 2_3, for group common power control, there may be additionally a tpc-index that is also specified so users know which power control field in the group belongs to them. If this parameter also needs to be updated based on collisions of the assigned tpc-Index value at RRC connection setup, which may be performed in the PUSCH-TPC-CommandConfig, PUCCH-TPC-CommandConfig, and SRS-TPC-CommandConfig IEs, then a method to update these parameters using a newly defined MAC CE may be used. Based on the number of UEs in the system, these tpc-Index values may not need to be updated or at least not upon every beam switch for each UE.

As such, certain embodiments useful for understanding the invention described herein may be related to group common commands which have only a group RNTI value to identify the group, and which may not have a UE-specific index to identify the particular UE within the group. Examples of current group common DCI formats for which this may be applicable include DCI format 2_0 (slot format indication) and DCI format 2_1 (preemption indication). For each of the analog beams, a different group RNTI value may be maintained because it may be desirable to ensure UEs that are associated with a particular beam belong to the same group (e.g., are assigned the same group RNTI value).

The current specification may only allow assignment of the group RNTI value at RRC connection setup. As such, when the UE moves to a new beam, if changing the group RNTI value was desired, a large L3 RRC reconfiguration message to change the value would have to be sent. This may be a slow process that cannot keep up with the fast beam switching that can take place as the user is moving to different areas in the cell and connecting to new analog beams via the existing Layer-2 centric beam management procedure.

Because only the group RNTI value may have to be changed when the UE changes to a new beam with the targeted DCI formats (e.g., DCI format 2_0 and format 2_1), using explicit Layer-2 MAC CE signaling for each beam change may not be an efficient solution. Instead, certain embodiments useful for understanding the invention which uses a reduced amount of signaling overhead may include associating a group RNTI value with each analog beam (e.g., each TCI index) as part of the initial Layer-3 RRC configuration message which is sent to the UE at RRC connection setup. When a UE changes to a new beam, the UE may refer to this internal table it has stored during connection setup (which tells it which group RNTI value it should now assume for itself) when it is associated with a particular TCI index (e.g., analog beam). As such, there may be no explicit Layer-2 MAC CE signaling used upon each beam change by the UE to change its group common RNTI value. Instead, the UE may use the group RNTI value that is associated with the corresponding TCI index of the new beam. In this way, signalling may be reduced because there may be no UE-specific index that is used for the group common DCI formats described herein.

Fig. 1 illustrates example structures of MAC CEs. For example, Fig. 1 illustrates a PUSCH-TPC MAC CE 100, a PUCCH-TPC MAC CE 102, and a SRS-TPC MAC CE 103. Specifically, the MAC CE 100 may illustrate a structure of MAC CEs for updating parameters associated with TPC-PUSCH-RNTIs used with DCI format 2_2. In addition, the MAC CE 102 may illustrate a structure of MAC CEs for updating parameters associated with TPC-PUCCH-RNTIs used with DCI format 2_2. Further, the MAC CE 104 may illustrate a structure of MAC CEs for updating parameters associated with TPC-SRS-RNTIs used with DCI format 2_3.

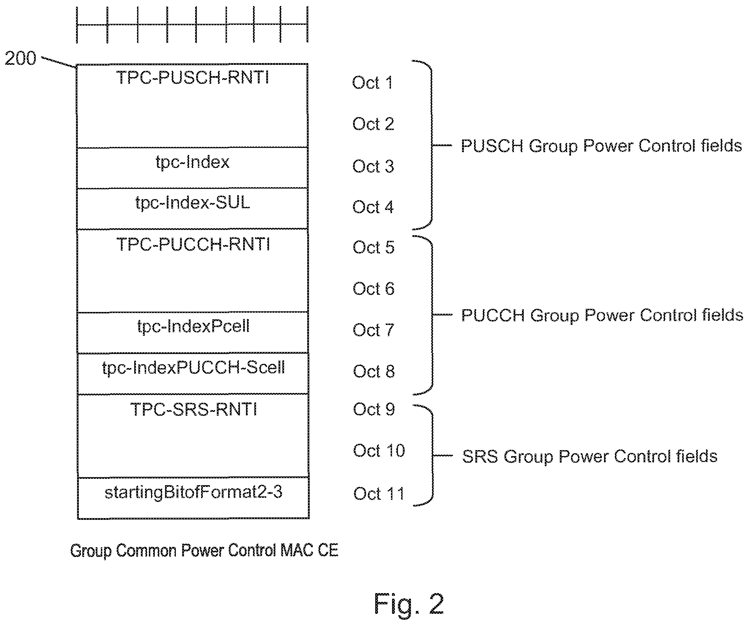

With respect to Fig. 1, RNTI values may have 16 bits, and thus may consume 2 octets. As RNTI values may be 16-bits, a proposed format of the MAC-CEs to indicate the change for PUSCH, PUCCH and SRS power control may be illustrated in Fig. 1, corresponding to MAC CEs 100, 102, and 104, respectively. In Fig. 1, a TPC index may allocate 8 bits, but other values are not precluded. While only the TPC-PUSCH-RNTIs and TPC-PUCCH-RNTIs may be used with DCI format 2_2, and the TPC-SRS-RNTIs may be used with DCI format 2_3, as illustrated, certain embodiments useful for understanding the invention can be generalized to any group common DCI format including DCI format 2_0 and DCI format 2_1, as well as any other newly introduced group common DCI format. In someexamples, these individual MAC CE(s) may be grouped together into a single group common power control MAC CE as illustrated in Fig. 2. MAC CEs may alternatively carry a subset of the information elements depicted in Figs. 1 and 2. This may reduce a MAC CE size and/or signalling overhead.

As described elsewhere herein, actions performed by a UE may be updated based on certain embodiments useful for understanding the invention. For example, the UE may perform certain new operations upon reception of the MAC CEs (or the single combined group power control MAC CE illustrated in Fig. 2). The UE may replace RRC configured (or any previously configured) values included in the MAC CE(s) described herein. In addition, the user-Index values specified in the MAC CEs described herein may replace the UE indices previously configured (e.g., by RRC configuration or previous MAC CEs of the same type) to define a field or block position within the GC DCI with the received RNTIs for the UE.

As described above, Fig. 1 is provided as an example. Other examples are possible.

Fig. 2 illustrates an example structure of a MAC CE,. Fig. 2 illustrates a group common power control MAC CE 200, where a structure of the MAC CE 200 groups together the parameters needed for PUSCH, PUCCH, and SRS group power control corresponding to DCI formats 2_2 and DCI formats 2_3. This structure may be used instead of the structures of the MAC CEs 100, 102, and 104 described above.

As indicated above, Fig. 2 is provided as an example. Other examples are possible.

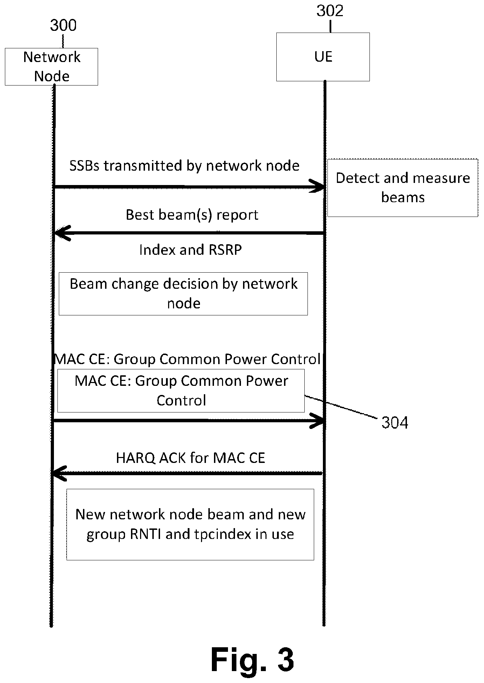

Fig. 3 illustrates an example signal diagram of using one or more MAC CEs described herein to update group common power control parameters. Fig. 3 illustrates operations of a network node 300 (e.g., a gNB) and a UE 302 with respect to certain embodiments described herein. For example, Fig. 3 illustrates use of one or more MAC CEs 304 for updating the group common power control parameters, including group common RNTIs and associated user indices at Layer-2. For example, the network node 300 may transmit the MAC CE 304 for group common power control to the UE 302 after determining to change a serving beam of the UE 302. The MAC CE 304 may be sent together with the MAC CE for beam change for a Layer-2 solution to managing group RNTI values, which may remain synchronized with beam changes. In other words, the MAC CE 304 may be sent along with the MAC CE used for the beam management procedure. Multiple MAC CEs can be multiplexed in the same MAC PDU transmission and, thus, multiple MAC CEs may be sent at the same time. This may provide for updating of new group RNTI values and associated UE index values at the same time as the serving beam for a UE is updated.

The network node 300 may maintain one or more group RNTI values for a specific purpose (e.g., a TPC-PUSCH-RNTI for PUSCH group power control using DCI format 2_2) that corresponds to a specific beam. Different beams may have different group RNTI values associated with them. When the UE 302 connects to the network, the network node may assign the group RNTI value to that UE (e.g., for a TPC-PUSCH-RNTI, a TPC-PUCCH-RNTI, and/or a TPC-SRS-RNTI) according to the beam the UE 302 uses to initially connect to the network. When the UE 302 serving beam is switched as part of the Layer-2 beam management procedure, then, at the same time, the MAC CE 304 may be sent to also update the group RNTI values and UE indices associated with them. This may be to correspond to the group RNTI value(s) being used on the new beam.

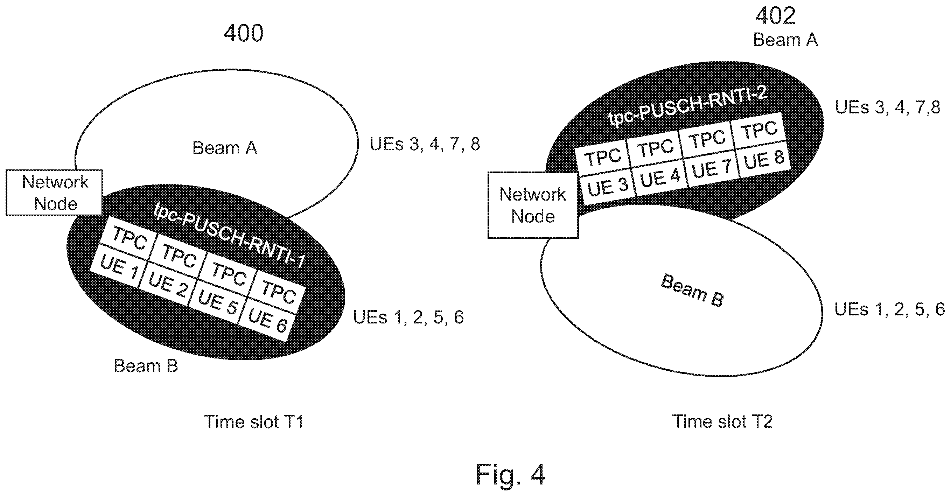

In this way, certain embodiments useful for understanding the invention described herein may provide for certain advantages. For example, a group common power control RNTI and an associated UE index into the group common DCI may be updated with a Layer-2 mechanism simultaneously with the Layer-2 beam management procedure. This may reduce latency with respect to updating RNTI and/or UE index values. The inefficiency issues described above may be solved, as the UE groups may be updated dynamically as UEs move in the cell and their serving beam are switched. This may ensure that UEs in the same group have the same serving beam. As such, group common power control DCI(s) sent on a particular beam may have TPC commands corresponding to UEs connected on that same beam. Thus, there may be no need to transmit the power control DCI on multiple beams in different time slots, thereby conserving network resources and/or computing resources. This may be illustrated in Fig. 4.

As described above, Fig. 3 is provided as an example. Other examples are possible.

Fig. 4 illustrates example transmissions to different groups of user equipment (UEs). Fig. 4 illustrates a first set of transmissions 400 to a set of UEs at a time slot T1 (e.g., transmission of a beam A and beam B, where beam B is used to transmit one or more of the MAC CEs described herein) and a second set of transmissions 402 to the set of UEs at a time slot T2 (e.g., transmission of a beam A and beam B, where beam A is used to transmit one or more of the MAC CEs described herein). In this example, UEs 1, 2, 5, and 6 may be connected to beam B as a serving beam and UEs 3, 4, 7, and 8 may be connected to beam A as a serving beam.

As illustrated, in certain embodiments useful for understanding the invention, the UE groups for the group common power control DCI (one group formed with the UEs connected to beam A, and another group formed with the UEs connected to beam B) may be maintained such that UEs in the group have the same serving beam. In this case, there may be no wasted TPC commands in each group common power control DCI that is transmitted, and a single group common power control DCI may be transmitted in each beam with no wasted TPC commands. This reduces signalling compared to operations that would have to use multiple group common DCIs to be transmitted in each beam, where some of the TPC commands are wasted via attempting to transmit to UEs that are not connected to the corresponding serving beam.

As described above, Fig. 4 is provided as an example. Other examples are possible.

Fig. 5 illustrates an example transmission configuration indicator (TCI) state list. Fig. 5 illustrates a tabular representation 500 of the modified TCI state list configuration described herein, given in the variable tci-StatesPDCCH-ToAddList when SSB is used as the reference signal type and each SSB beam is associated with an index. A TCI index may include RNTI types and values, which may be associated with that particular TCI index.

As described above, Fig. 5 is provided as an example. Other examples are possible.

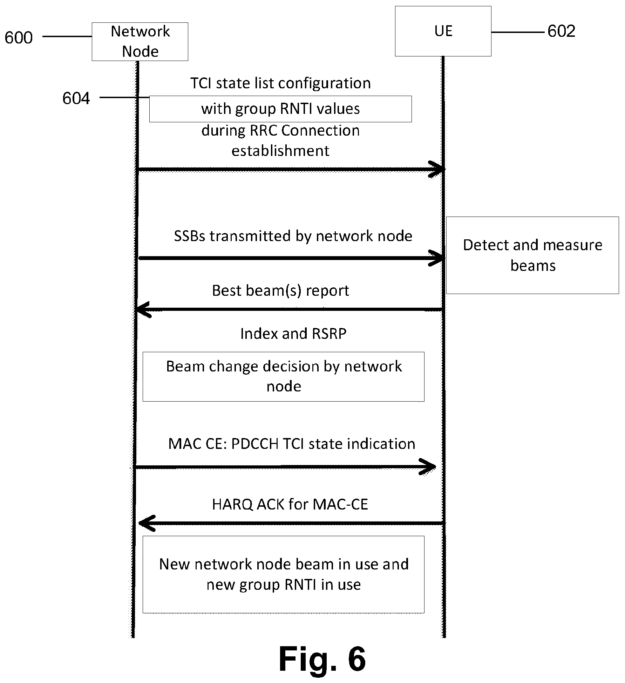

Fig. 6 illustrates an example signal diagram of using one or more group radio network temporary identifier (RNTI) per TCI index as part of a TCI state list. Fig. 6 illustrates a network node 600 and a UE 602. In addition, Fig. 6 illustrates use of one or more new group RNTIs 604 per TCI index as part of the TCI state list configuration at RRC connection establishment. When the MAC CE for beam change is received by the UE 602 for changing the TCI index corresponding to a new beam, at the same time, the UE may start using the group RNTI value(s) configured for that beam.

The group-RNTI-list may be included in the TCI state list configuration, which may be performed in association with the RRC connection establishment procedure. This may provide for the UE 602 to determine what type of group RNTIs, along with the associated value, to use when it is switched to a new beam. When the UE 602 undergoes a serving beam change from the MAC CE for PDCCH TCI state indication, at the same time, it may then begin using a new group RNTI value included in the TCI state list configuration.

When sending the TCI state list configuration to each UE 602 as part of the RRC connection establishment, the network node 600 may use the same group RNTI values for a particular TCI index for different UEs 602. In this way, the UEs 602 that are associated with a particular beam (e.g., TCI index) may have the same group RNTI value for a given purpose.

The gNB may have the ability to send a group common DCI message to those UEs associated with a particular beam (e.g., TCI index) by transmitting the DCI message and scrambling the cyclic redundancy check (CRC) bits of that message with the group RNTI value associated with that TCI index, as provided in the TCI state list configuration. UEs 602 that are connected to the beam defined by a TCI index may attempt to decode group common DCI messages by unscrambling the CRC bits of that message with the group RNTI value that the UE 602 has been informed to associate with that TCI index, as per the TCI state list configuration.

Thus, certain embodiments useful for understanding the invention described herein may provide for implicit (e.g., without explicit signaling) change in a group RNTI value that a UE 602 uses based on which TCI index (e.g., beam) with which it is associated. As a UE 602 moves in the network and is associated with different TCI indices (e.g., different beams), the UE may implicitly use the group RNTI value that is associated with that beam as per the TCI state list configuration. This may provide for addressing of UEs associated with a particular beam in a group common fashion and may provide advantages for group common power control or group common DCIs for uplink CG, for example.

As described above, Fig. 6 is provided as an example. Other examples are possible.

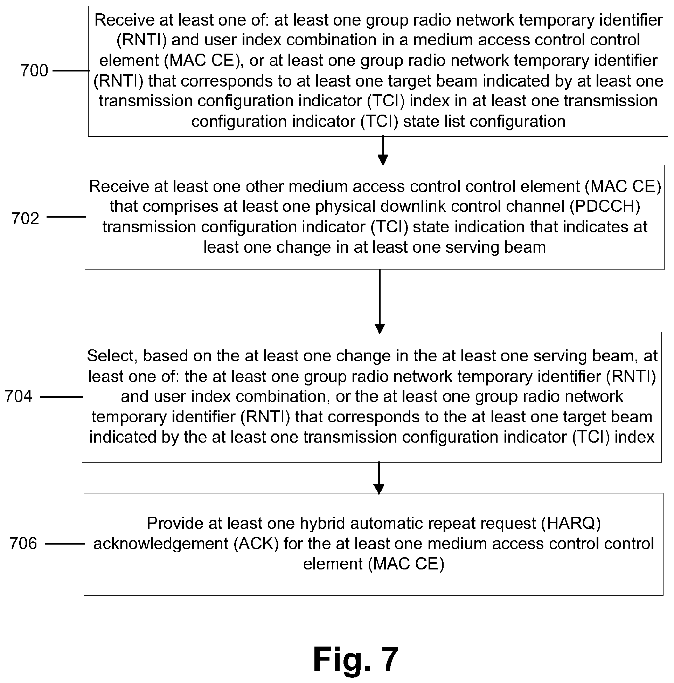

Fig. 7 illustrates an example flow diagram of a method, according to some embodiments. For example, Fig. 7 shows example operations of a UE (e.g., similar to apparatus 20). Some of the operations illustrated in Fig. 7 may be similar to some operations shown in, and described with respect to, Figs. 1-6.

In an embodiment, the method includes, at 700, receiving at least one of: at least one group radio network temporary identifier (RNTI) and user index combination in a medium access control control element (MAC CE), or at least one group radio network temporary identifier (RNTI) that corresponds to at least one target beam indicated by at least one transmission configuration indicator (TCI) index in at least one transmission configuration indicator (TCI) state list configuration. In an embodiment, the method includes, at 702, receiving at least one other medium access control control element (MAC CE) that comprises at least one physical downlink control channel (PDCCH) transmission configuration indicator (TCI) state indication that indicates at least one change in at least one serving beam. In an embodiment, the method includes, at 704, selecting, based on the at least one change in the at least one serving beam, at least one of: the at least one group radio network temporary identifier (RNTI) and user index combination, or the at least one group radio network temporary identifier (RNTI) that corresponds to the at least one target beam indicated by the at least one transmission configuration indicator (TCI) index. In an embodiment, the method includes, at 706, providing at least one hybrid automatic repeat request (HARQ) acknowledgement (ACK) for the at least one medium access control control element (MAC CE). The at least one hybrid automatic repeat request (HARQ) acknowledgement (ACK) comprises information indicating the at least one selection.

Such HARQ ACK feedback mechanism includes certain operations, where, if the UE has received a MAC CE activation command for one of the TCI states, the UE applies the activation command, for example, 3 milliseconds (ms) after a slot, where the UE transmits HARQ-ACK information for the PDSCH providing the activation command. In other words, the ACK indicates successful reception of PDSCH carrying the MAC CE, and thus can be interpreted as ACK for the MAC CE. In the embodiment of having at least two MAC CEs at a time carried by PDSCH, a single ACK for the PDSCH is sufficient. This involves having the at least two MAC CEs included in the same code block group on PDSCH. Since MAC CEs have small size and may be placed together at the beginning of MAC PDU, under normal operation conditions two MAC CEs ends up in the same code block group, and there is a single ACK for the at least two MAC CEs. To enforce this case, it is introduced to carry the at least two MAC CEs within the same code block group on PDSCH. In the more general case, the at least two MAC CEs may be carried within different code block groups of PDSCH, and there is separate HARQ-ACK for each code block group. In this case, there are rules introduced on how to indicate successful reception of the at least two MAC CEs, for example, by a logical AND operation of the individual ACKs, where the AND operation is performed either by the transmit node or by the receive node.

In some embodiments, the selecting further comprises selecting, by the user equipment (UE), the at least one group radio network temporary identifier (RNTI) and user index combination. In some embodiments, the at least one other medium access control control element (MAC CE) is configured to indicate at least one change in at least one physical uplink shared channel (PUSCH) power control, at least one physical uplink control channel (PUCCH) power control, or at least one sounding reference signal (SRS) power control.

In some embodiments, the method further comprises replacing at least one previously configured group radio network temporary identifier (RNTI) and user index combination with the at least one group radio network temporary identifier (RNTI) and user index combination included in the at least one medium access control control element (MAC CE). In some embodiments, the at least one hybrid automatic repeat request (HARQ) acknowledgement (ACK) comprises information acknowledging a beam change to the at least one target beam and that the at least one group radio network temporary identifier (RNTI) and user index combination is in use. In some embodiments, the method further comprises receiving at least one beam, providing at least one measurement report that includes information identifying at least one measurement of the at least one beam, and the at least one medium access control control element (MAC CE) and the at least one other medium access control element (MAC CE) is received after providing the at least one measurement report.

In some embodiments, the at least one group radio network temporary identifier (RNTI) and user index combination is associated with at least one beam to which the at least one serving beam is changed. In some embodiments, the user index comprises a transmit power control (TPC) index. In some embodiments, the selecting further comprises selecting, by the user equipment (UE), the group radio network temporary identifier (RNTI) that corresponds to the at least one target beam indicated by the at least one transmission configuration indicator (TCI) index. In some embodiments, the method further comprises receiving the at least one transmission configuration indicator (TCI) state list configuration prior to receiving the at least one other medium access control control element (MAC CE).

In some embodiments, the method further comprises replacing at least one previously configured group radio network temporary identifier (RNTI) with the at least one group radio network temporary identifier (RNTI) included in the at least one transmission configuration indicator (TCI) state list configuration, wherein the at least one group radio network temporary identifier (RNTI) corresponds to the at least one transmission configuration indicator (TCI) associated with the at least one target beam. In some embodiments, the hybrid automatic repeat request (HARQ) acknowledgement (ACK) comprises information acknowledging a beam change to the at least one target beam and that the at least one group radio network temporary identifier (RNTI) is in use.

In some embodiments, the method further comprises receiving at least one beam after receiving the at least one transmission configuration indicator (TCI) state list configuration, providing at least one measurement report that includes information identifying at least one measurement of the at least one beam, and the at least one other medium access control control element (MAC CE) is received after providing the at least one measurement report. In some embodiments, the at least one target beam comprises at least one beam to which the at least one serving beam is being changed.

As described above, Fig. 7 is provided as an example. Other examples are possible according to some embodiments.

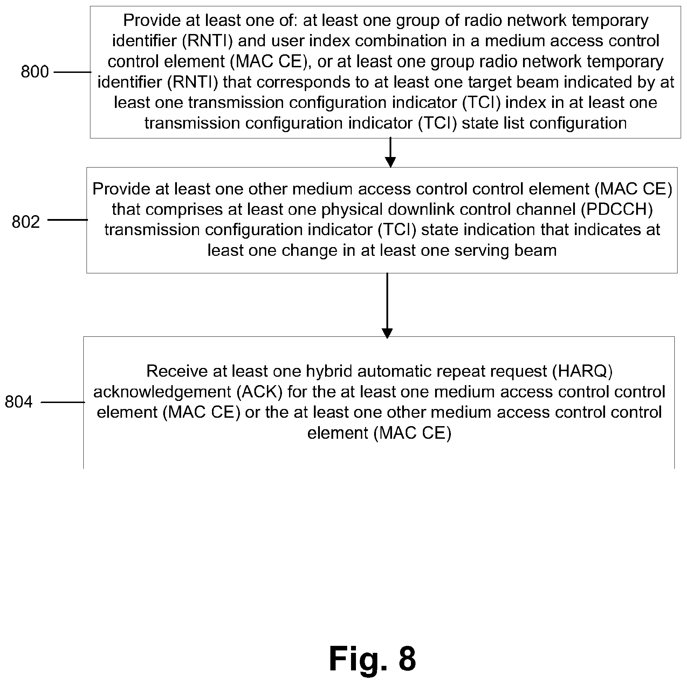

Fig. 8 illustrates an example flow diagram of a method, according to some embodiments. For example, Fig. 8 shows example operations of a network node (e.g., similar to apparatus 10). Some of the operations illustrated in Fig. 8 may be similar to some operations shown in, and described with respect to, Figs. 1-6.

In an embodiment, the method includes, at 800, providing at least one of: at least one group radio network temporary identifiers (RNTI) and user index combination in a medium access control control element (MAC CE), or at least one group radio network temporary identifier (RNTI) that corresponds to at least one target beam indicated by at least one transmission configuration indicator (TCI) index in at least one transmission configuration indicator (TCI) state list configuration. In an embodiment, the method includes, at 802, providing at least one other medium access control control element (MAC CE) that comprises at least one physical downlink control channel (PDCCH) transmission configuration indicator (TCI) state indication that indicates at least one change in at least one serving beam. In an embodiment, the method includes, at 804, receiving at least one hybrid automatic repeat request (HARQ) acknowledgement (ACK) for the at least one medium access control control element (MAC CE) or the at least one other medium access control control element (MAC CE). The at least one hybrid automatic repeat request (HARQ) acknowledgement (ACK) may comprise information indicating the at least one of: at least one group radio network temporary identifier (RNTI) and user index combination, or the at least one group radio network temporary identifier (RNTI) that corresponds to the at least one target beam indicated by the at least one transmit power control (TPC) index.

In some embodiments, the at least one other medium access control control element (MAC CE) may be configured to indicate at least one change related to at least one physical uplink shared channel (PUSCH) power control, at least one physical uplink control channel (PUCCH) power control, or at least one sounding reference signal (SRS) power control.

In some embodiments, the at least one hybrid automatic repeat request (HARQ) acknowledgement (ACK) may comprise information acknowledging a beam change to the at least one target beam and that the at least one group radio network temporary identifier (RNTI) and user index combination is in use. In some embodiments, the method may further comprise providing at least one beam, receiving at least one measurement report that includes information identifying at least one measurement of the at least one beam, determining to change at least one serving beam based on the at least one measurement report, and providing the at least one medium access control control element (MAC CE) or the at least one other medium access control control element (MAC CE) may further comprise providing the at least one medium access control control element (MAC CE) or the at least one other medium access control control element (MAC CE) after determining to change the at least one serving beam.

In some embodiments, the at least one group radio network temporary identifier (RNTI) and user index combination may replace at least one previously configured group radio network temporary identifier (RNTI) and user index combination. In some embodiments, the at least one a group radio network temporary identifier (RNTI) and user index combination is associated with at least one beam to which the at least one serving beam is changed. In some embodiments, the user index comprises a transmit power control (TPC) index.

In some embodiments, the method further comprises providing the at least one transmission configuration indicator (TCI) state list configuration prior to providing the at least one other medium access control control element (MAC CE). In some embodiments, the at least one transmission configuration indicator (TCI) state list configuration comprises information that identifies the at least one group radio network temporary identifier (RNTI) that corresponds to the at least one target beam indicated by the at least one transmission configuration indicator (TCI) index. In some embodiments, the hybrid automatic repeat request (HARQ) acknowledgement (ACK) comprises information acknowledging a beam change to the at least one target beam and that the at least one group radio network temporary identifier (RNTI) is in use.

In some embodiments, the method further comprises providing at least one beam after providing the at least one transmission configuration indicator (TCI) state list configuration, receiving at least one measurement report that includes information identifying at least one measurement of the at least one beam, and providing the at least one other medium access control control element (MAC CE) comprises providing the at least one other medium access control control element (MAC CE) after receiving the at least one measurement report. In some embodiments, the at least one group radio network temporary identifier (RNTI) replaces at least one previously configured group radio network temporary identifier (RNTI). In some embodiments, the at least one target beam comprises at least one beam to which the at least one serving beam is changed.

As described above, Fig. 8 is provided as an example. Other examples are possible according to some embodiments.

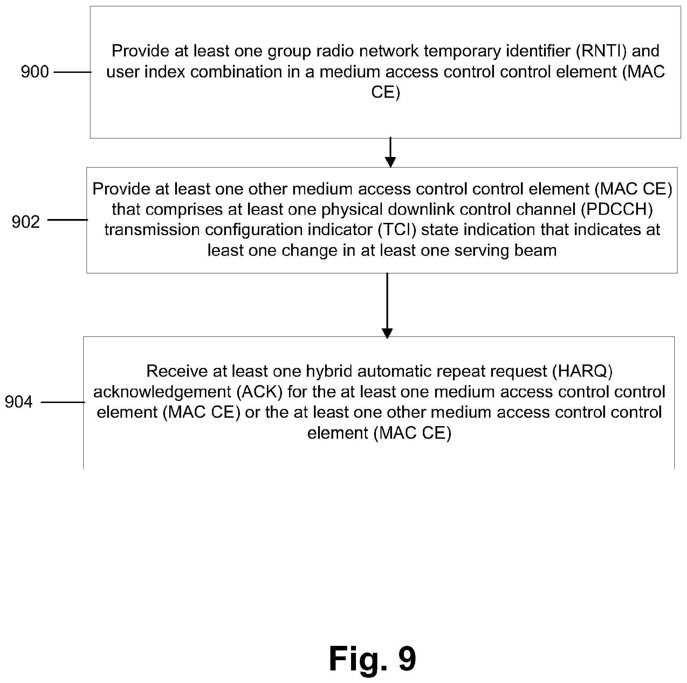

Fig. 9 illustrates an example flow diagram of a method, according to some embodiments. For example, Fig. 9 shows example operations of a network node (e.g., similar to apparatus 10). Some of the operations illustrated in Fig. 9 may be similar to some operations shown in, and described with respect to, Figs. 1-6.

In an embodiment, the method includes, at 900, providing at least one group radio network temporary identifier (RNTI) and user index combination in a medium access control control element (MAC CE). In an embodiment, the method includes, at 902, providing at least one other medium access control control element (MAC CE) that comprises at least one physical downlink control channel (PDCCH) transmission configuration indicator (TCI) state indication that indicates at least one change in at least one serving beam. In an embodiment, the method includes, at 904, receiving at least one hybrid automatic repeat request (HARQ) acknowledgement (ACK) for the at least one medium access control control element (MAC CE) or the at least one other medium access control control element (MAC CE). The at least one hybrid automatic repeat request (HARQ) acknowledgement (ACK) comprises information indicating that the at least one group radio network temporary identifier (RNTI) and user index combination is in use.

In some embodiments, the at least one other medium access control control element (MAC CE) may be configured to indicate at least one change related to at least one physical uplink shared channel (PUSCH) power control, at least one physical uplink control channel (PUCCH) power control, or at least one sounding reference signal (SRS) power control. In some embodiments, the at least one hybrid automatic repeat request (HARQ) acknowledgement (ACK) comprises information acknowledging a beam change to the at least one target beam and that the at least one group radio network temporary identifier (RNTI) and user index combination is in use.

In some embodiments, the method further includes providing at least one beam, receiving at least one measurement report that includes information identifying at least one measurement of the at least one beam, determining to change at least one serving beam based on the at least one measurement report, and providing the at least one medium access control control element (MAC CE) or the at least one other medium access control control element (MAC CE) further comprises providing the at least one medium access control control element (MAC CE) or the at least one other medium access control control element (MAC CE) after determining to change the at least one serving beam. In some embodiments, the at least one group radio network temporary identifier (RNTI) and user index combination replaces at least one previously configured group radio network temporary identifier (RNTI) and user index combination. In some embodiments, the at least one a group radio network temporary identifier (RNTI) and user index combination is associated with at least one beam to which the at least one serving beam is changed. In some embodiments, the user index comprises a transmit power control (TPC) index.

As described above, Fig. 9 is provided as an example. Other examples are possible according to some embodiments.

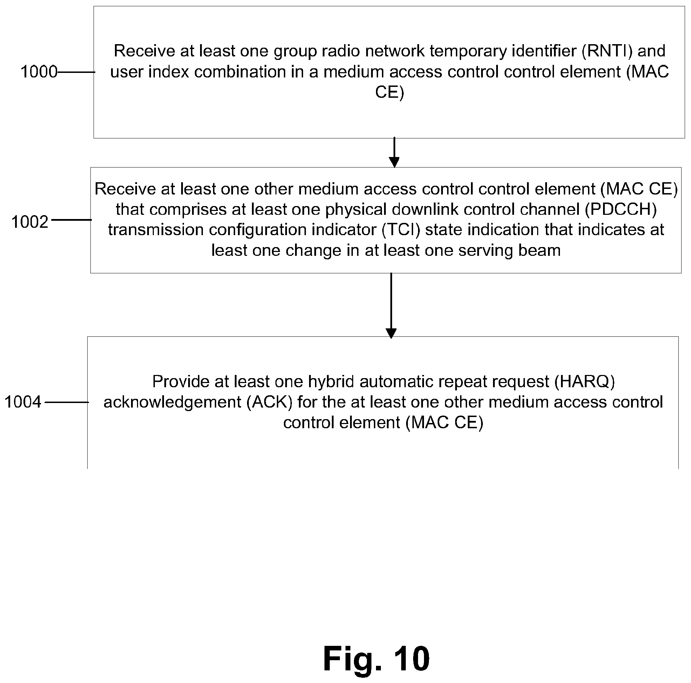

Fig. 10 illustrates an example flow diagram of a method, according to some embodiments. For example, Fig. 10 shows example operations of a user equipment (e.g., similar to apparatus 20). Some of the operations illustrated in Fig. 10 may be similar to some operations shown in, and described with respect to, Figs. 1-6.

In an embodiment, the method includes, at 1000, receiving at least one group radio network temporary identifier (RNTI) and user index combination in a medium access control control element (MAC CE). In an embodiment, the method includes, at 1002, receiving at least one other medium access control control element (MAC CE) that comprises at least one physical downlink control channel (PDCCH) transmission configuration indicator (TCI) state indication that indicates at least one change in at least one serving beam. In an embodiment, the method includes, at 1004, providing at least one hybrid automatic repeat request (HARQ) acknowledgement (ACK) for the at least one other medium access control control element (MAC CE). The at least one hybrid automatic repeat request (HARQ) acknowledgement (ACK) may comprise information indicating that the at least one group radio network temporary identifier (RNTI) and user index combination is in use.

In some embodiments, the method further includes selecting the at least one group radio network temporary identifier (RNTI) and user index combination. In some embodiments, the at least one medium access control control element (MAC CE) is configured to indicate at least one change in at least one physical uplink shared channel (PUSCH) power control, at least one physical uplink control channel (PUCCH) power control, or at least one sounding reference signal (SRS) power control. In some embodiments, the method further includes replacing at least one previously configured group radio network temporary identifier (RNTI) and user index combination with the at least one group radio network temporary identifier (RNTI) and user index combination included in the at least one medium access control control element (MAC CE).

In some embodiments, the at least one hybrid automatic repeat request (HARQ) acknowledgement (ACK) comprises information acknowledging a beam change to the at least one target beam and that the at least one group radio network temporary identifier (RNTI) and user index combination is in use. In some embodiments, the method further comprises receiving at least one beam, providing at least one measurement report that includes information identifying at least one measurement of the at least one beam, and the at least one medium access control control element (MAC CE) and the at least one other medium access control control element (MAC CE) is received after providing the at least one measurement report. In some embodiments, the at least one group radio network temporary identifier (RNTI) and user index combination is associated with at least one beam to which the at least one serving beam is changed. In some embodiments, the user index comprises a transmit power control (TPC) index.

As described above, Fig. 10 is provided as an example. Other examples are possible according to some embodiments.

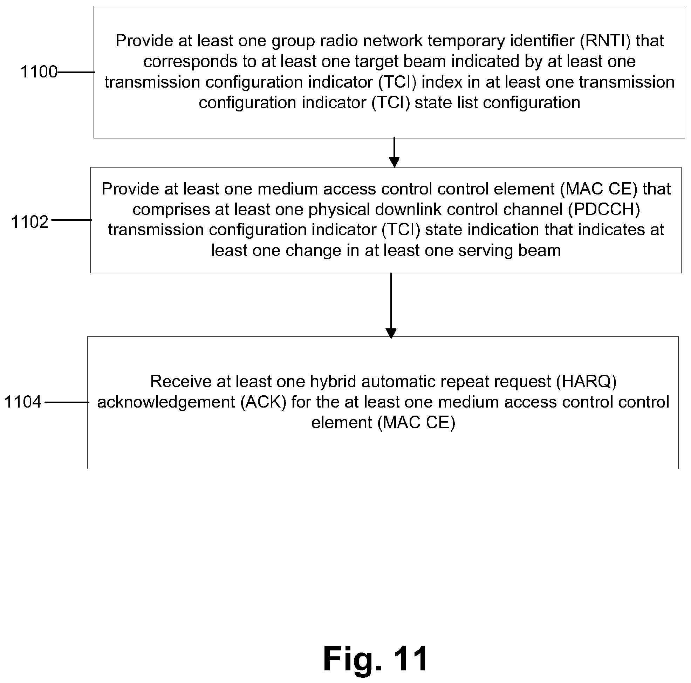

Fig. 11 illustrates an example flow diagram of a method, according to some embodiments. For example, Fig. 11 shows example operations of a network node (e.g., similar to apparatus 10). Some of the operations illustrated in Fig. 11 may be similar to some operations shown in, and described with respect to, Figs. 1-6.

In an embodiment, the method includes, at 1100, providing at least one group radio network temporary identifier (RNTI) that corresponds to at least one target beam indicated by at least one transmission configuration indicator (TCI) index in at least one transmission configuration indicator (TCI) state list configuration. In an embodiment, the method includes, at 1102, providing at least one medium access control control element (MAC CE) that comprises at least one physical downlink control channel (PDCCH) transmission configuration indicator (TCI) state indication that indicates at least one change in at least one serving beam. In an embodiment, the method includes, at 1104, receiving at least one hybrid automatic repeat request (HARQ) acknowledgement (ACK) for the at least one medium access control control element (MAC CE). The at least one hybrid automatic repeat request (HARQ) acknowledgement (ACK) comprises information acknowledging that the at least one group radio network temporary identifier (RNTI) that corresponds to the at least one target beam indicated by the at least one transmission configuration indicator (TCI) index is in use

In some embodiments, the method further comprises providing the at least one transmission configuration indicator (TCI) state list configuration prior to providing the at least one medium access control control element (MAC CE). In some embodiments, the at least one transmission configuration indicator (TCI) state list configuration comprises information that identifies the at least one group radio network temporary identifier (RNTI) that corresponds to the at least one target beam indicated by the at least one transmission configuration indicator (TCI) index. In some embodiments, the hybrid automatic repeat request (HARQ) acknowledgement (ACK) comprises information acknowledging a beam change to the at least one target beam and that the at least one group radio network temporary identifier (RNTI) is in use. In some embodiments, the method further comprises providing at least one beam after providing the at least one transmission configuration indicator (TCI) state list configuration, receiving at least one measurement report that includes information identifying at least one measurement of the at least one beam, and providing the at least one medium access control control element (MAC CE) comprises providing the at least one medium access control control element (MAC CE) after receiving the at least one measurement report.

In some embodiments, the at least one group radio network temporary identifier (RNTI) replaces at least one previously configured group radio network temporary identifier (RNTI). In some embodiments, the at least one target beam comprises at least one beam to which the at least one serving beam is changed.

As described above, Fig. 11 is provided as an example. Other examples are possible according to some embodiments.

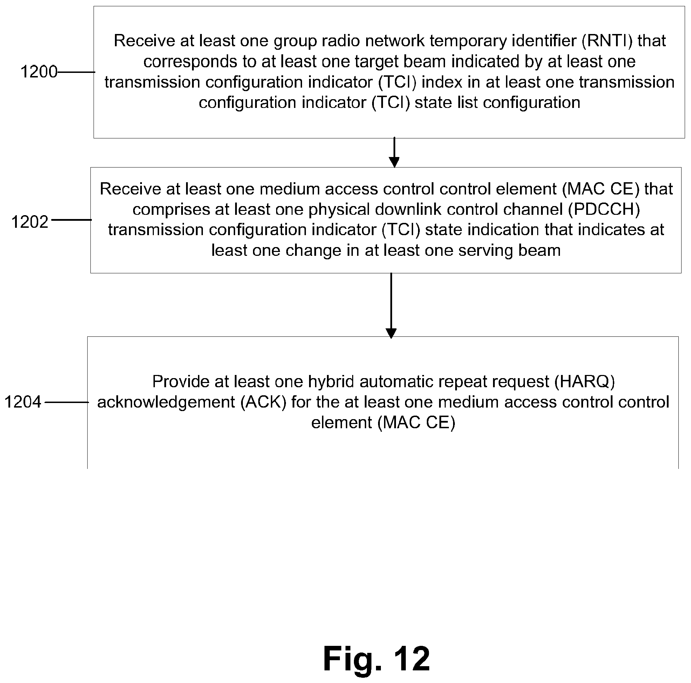

Fig. 12 illustrates an example flow diagram of a method, according to some embodiments. For example, Fig. 12 shows example operations of a user equipment (e.g., similar to apparatus 20). Some of the operations illustrated in Fig. 12 may be similar to some operations shown in, and described with respect to, Figs. 1-6.

In an embodiment, the method includes, at 1200, receiving at least one group radio network temporary identifier (RNTI) that corresponds to at least one target beam indicated by at least one transmission configuration indicator (TCI) index in at least one transmission configuration indicator (TCI) state list configuration. In an embodiment, the method includes, at 1202, receiving at least one medium access control control element (MAC CE) that comprises at least one physical downlink control channel (PDCCH) transmission configuration indicator (TCI) state indication that indicates at least one change in at least one serving beam. In an embodiment, the method includes, at 1204, providing at least one hybrid automatic repeat request (HARQ) acknowledgement (ACK) for the at least one medium access control control element (MAC CE). The at least one hybrid automatic repeat request (HARQ) acknowledgement (ACK) comprises information acknowledging that the at least one group radio network temporary identifier (RNTI) that corresponds to the at least one target beam indicated by the at least one transmission configuration indicator (TCI) index in the at least one transmission configuration indicator (TCI) state list configuration is in use.

In some embodiments, the method further include selecting the group radio network temporary identifier (RNTI) that corresponds to the at least one target beam indicated by the at least one transmission configuration indicator (TCI) index. In some embodiments, the method further includes receiving the at least one transmission configuration indicator (TCI) state list configuration prior to receiving the at least one medium access control control element (MAC CE). In some embodiments, the method further includes replacing at least one previously configured group radio network temporary identifiers (RNTI) with the at least one group radio network temporary identifier (RNTI) included in the at least one transmission configuration indicator (TCI) state list configuration. In some embodiments, the at least one group radio network identifier (RNTI) corresponds to the at least one transmission configuration indicator (TCI) associated with the at least one target beam.

In some embodiments, the hybrid automatic repeat request (HARQ) acknowledgement (ACK) comprises information acknowledging a beam change to the at least one target beam and that the at least one group radio network temporary identifier (RNTI) is in use. In some embodiments, the method further includes receiving at least one beam after receiving the at least one transmission configuration indicator (TCI) state list configuration, providing at least one measurement report that includes information identifying at least one measurement of the at least one beam, and the at least one medium access control control element (MAC CE) may be received after providing the at least one measurement report. In some embodiments, the at least one target beam comprises at least one beam to which the at least one serving beam is being changed.

As described above, Fig. 12 is provided as an example. Other examples are possible according to some embodiments.

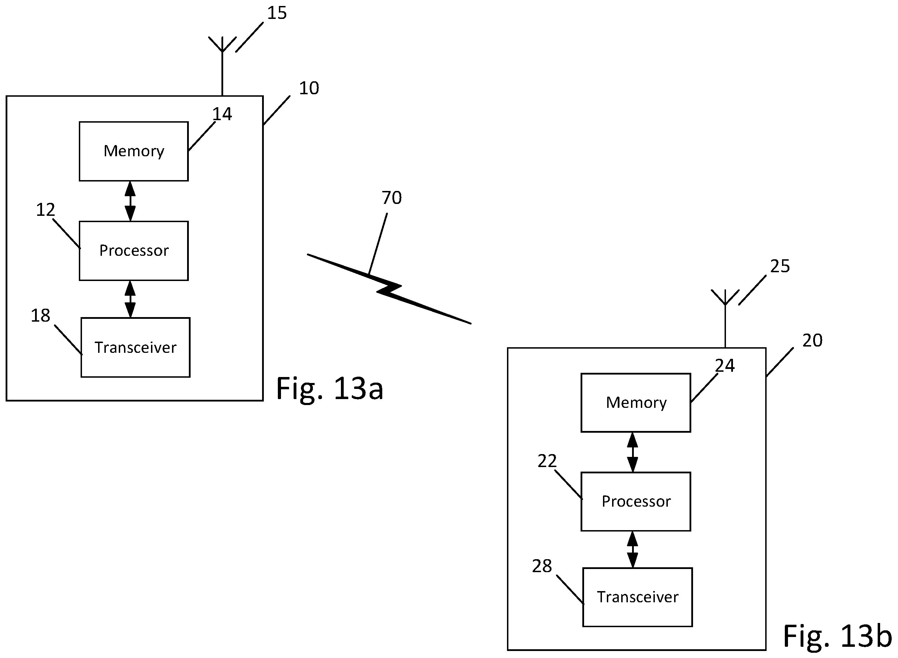

Fig. 13a illustrates an example of an apparatus 10 according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), and/or a WLAN access point, associated with a radio access network, such as a LTE network, 5G or NR. In example embodiments, apparatus 10 may be an eNB in LTE or gNB in 5G.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 13a.

As illustrated in the example of Fig. 13a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 13a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like.

According to certain embodiments, apparatus 10 may be controlled by memory 14 and processor 12 to perform the functions associated with any of the embodiments described herein, such as some operations of flow or signaling diagrams illustrated in Figs. 1-12.

For instance, in one embodiment, apparatus 10 may be controlled by memory 14 and processor 12 to provide at least one of: at least one group radio network temporary identifier (RNTI) and user index combination in a medium access control control element (MAC CE), or at least one group radio network temporary identifier (RNTI) that corresponds to at least one target beam indicated by at least one transmission configuration indicator (TCI) index in at least one transmission configuration indicator (TCI) state list configuration. In an embodiment, apparatus 10 may be controlled by memory 14 and processor 12 to provide at least one other medium access control control element (MAC CE) that comprises at least one physical downlink control channel (PDCCH) transmission configuration indicator (TCI) state indication that indicates at least one change in at least one serving beam. In one embodiment, apparatus 10 may be controlled by memory 14 and processor 12 to receive at least one hybrid automatic repeat request (HARQ) acknowledgement (ACK) for the at least one medium access control control element (MAC CE). The at least one hybrid automatic repeat request (HARQ) acknowledgement (ACK) may comprise information indicating at least one of: the at least one group radio network temporary identifier (RNTI) and user index combination, or the at least one group radio network temporary identifier (RNTI) that corresponds to the at least one target beam indicated by the at least one transmission configuration indicator (TCI) index.

Fig. 13b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 13b.

As illustrated in the example of Fig. 13b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 13b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Figs. 1-12.

For instance, in one embodiment, apparatus 20 may be controlled by memory 24 and processor 22 to receive at least one of: at least one group radio network temporary identifiers (RNTI) and user index combination in a medium access control control element (MAC CE), or at least one group radio network temporary identifier (RNTI) that corresponds to at least one target beam indicated by at least one transmission configuration indicator (TCI) index in at least one transmission configuration indicator (TCI) state list configuration. In an embodiment, apparatus 20 may be controlled by memory 24 and processor 22 to receive at least one other medium access control control element (MAC CE) that comprises at least one physical downlink control channel (PDCCH) transmission configuration indicator (TCI) state indication that indicates at least one change in at least one serving beam. In one embodiment, apparatus 20 may be controlled by memory 24 and processor 22 to select, based on the at least one change in the at least one serving beam, at least one of: the at least one group radio network temporary identifier (RNTI) and user index combination, or the at least one group radio network temporary identifier (RNTI) that corresponds to the at least one target beam indicated by the at least one transmission configuration indicator (TCI) index. In one embodiment, apparatus 20 may be controlled by memory 24 and processor 22 to provide at least one hybrid automatic repeat request (HARQ) acknowledgement (ACK) for the at least one medium access control control element (MAC CE). The at least one hybrid automatic repeat request (HARQ) acknowledgement (ACK) may comprise information indicating the at least one selection.

Therefore, certain example embodiments provide several technological improvements, enhancements, and/or advantages over existing technological processes. For example, one benefit of some example embodiments is reduced signaling, as described herein. Accordingly, the use of some example embodiments results in improved functioning of communications networks and their nodes and, therefore constitute an improvement at least to the technological field of network subscription management, among others.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations required for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein apply equally to both singular and plural implementations, regardless of whether singular or plural language is used in connection with describing certain embodiments. For example, an embodiment that describes operations of a single network node equally applies to embodiments that include multiple instances of the network node, and vice versa.

One having ordinary skill in the art will readily understand that the example embodiments as discussed above may be practiced with operations in a different order, and/or with hardware elements in configurations which are different than those which are disclosed. Therefore, although some embodiments have been described based upon these example preferred embodiments, it would be apparent to those of skill in the art that certain modifications, variations, and alternative constructions would be apparent, while remaining within the scope of example embodiments. The scope of the invention is set out by the claims.

### PARTIAL GLOSSARY

- DCI: Downlink Control Information
- GC: Group common
- gNB: base station in the 5G NR network
- MAC: medium access control
- MAC CE: MAC Control Element
- mmWave: millimeter wave
- NR: New Radio
- PUCCH: Physical Uplink Control Channel
- PUSCH: Physical Uplink Shared Channel
- PDCCH: Physical Downlink Control Channel
- PDCP: Packet Data Converge Protocol
- PHY: Physical Layer
- RLC: Radio Link Control
- RNTI: Radio Network Temporary Identifier
- RRC: Radio Resource Control
- SFI: Slot Format Indication
- SRS: Sounding Reference Signal
- SSB: Synchronization Signal Block
- TCI: Transmission Control Information
- TPC: Transmit Power Control
- UE: User Equipment (mobile)

## Claims

1. A user equipment (20), comprising:
means for receiving at least one of:
at least one group radio network temporary identifier, RNTI, and user index combination in a medium access control control element, MAC CE, or
at least one group radio network temporary identifier, RNTI, that corresponds to at least one target beam indicated by at least one transmission configuration indicator, TCI, index in at least one transmission configuration indicator, TCI, state list configuration;
means for receiving at least one other medium access control control element, MAC CE, that comprises at least one physical downlink control channel, PDCCH, transmission configuration indicator, TCI, state indication that indicates at least one change in at least one serving beam;
means for selecting and based on the at least one change in the at least one serving beam, at least one of:
the at least one group radio network temporary identifier, RNTI, and user index combination, or
the at least one group radio network temporary identifier, RNTI, that corresponds to the at least one target beam indicated by the at least one transmission configuration indicator, TCI index; and
means for providing at least one hybrid automatic repeat request, HARQ, acknowledgement, ACK, for the at least one other medium access control control element, MAC CE,
wherein the at least one hybrid automatic repeat request, HARQ, acknowledgement, ACK, comprises information indicating the at least one selection.

2. The user equipment (20) according to claim 1, wherein the means for selecting further comprises:
means for selecting the at least one group radio network temporary identifier, RNTI and user index combination.

3. The user equipment (20) according to claim 2, wherein the at least one other medium access control control element, MAC CE, is configured to indicate at least one change in at least one physical uplink shared channel, PUSCH power control, at least one physical uplink control channel, PUCCH, power control, or at least one sounding reference signal, SRS, power control.

4. The user equipment (20) according to claims 2 or 3 further comprises:
means for replacing at least one previously configured group radio network temporary identifier, RNTI, and user index combination with the at least one group radio network temporary identifier, RNTI, and user index combination included in the at least one medium access control control element, MAC CE.

5. The user equipment (20) according to any of claims 2-4, wherein the at least one hybrid automatic repeat request, HARQ acknowledgement, ACK, comprises information acknowledging a beam change to the at least one target beam and that the at least one group radio network temporary identifier, RNTI, and user index combination is in use.

6. The user equipment (20) according to any of claims 2-5 further comprising:
means for receiving at least one beam;
means for providing at least one measurement report that includes information identifying at least one measurement of the at least one beam; and
wherein the at least one medium access control control element, MAC CE, and the at least one other medium access control control element, MAC CE, are received after providing the at least one measurement report.

7. The user equipment (20) according to any of claims 2-6, wherein the at least one group radio network temporary identifier, RNTI, and user index combination is associated with at least one beam to which the at least one serving beam is changed.

8. The user equipment (20) according to claim 1, wherein the means for selecting further comprises:
means for selecting the group radio network temporary identifier, RNTI, that corresponds to the at least one target beam indicated by the at least one transmission configuration indicator, TCI, index.

9. The user equipment (20) according to claim 8 further comprising:
means for replacing at least one previously configured group radio network temporary identifier, RNTI, with the at least one group radio network temporary identifier, RNTI, included in the at least one transmission configuration indicator, TCI, state list configuration, wherein the at least one group radio network temporary identifier, RNTI corresponds to the at least one transmission configuration indicator, TCI, associated with the at least one target beam.

10. The user equipment (20) according to claims 8 or 9, wherein the hybrid automatic repeat request, HARQ, acknowledgement, ACK, comprises information acknowledging a beam change to the at least one target beam and that the at least one group radio network temporary identifier, RNTI, is in use.

11. The user equipment (20) according to any of claims 8-10, wherein the at least one target beam comprises at least one beam to which the at least one serving beam is being changed.

12. A network apparatus (10), comprising:
means for providing at least one of:
at least one group radio network temporary identifier, RNTI and user index combination in a medium access control control element, MAC CE, or
at least one group radio network temporary identifier, RNTI, that corresponds to at least one target beam indicated by at least one transmission configuration indicator, TCI index in at least one transmission configuration indicator, TCI state list configuration;
means for providing at least one other medium access control control element, MAC CE, that comprises at least one physical downlink control channel, PDCCH, transmission configuration indicator, TCI state indication that indicates at least one change in at least one serving beam; and
means for receiving at least one hybrid automatic repeat request, HARQ acknowledgement, ACK for the at least one other medium access control control element, MAC CE,
wherein the at least one hybrid automatic repeat request, HARQ, acknowledgement, ACK, comprises information indicating at least one of:
the at least one group radio network temporary identifier, RNTI, and user index combination, or
the at least one group radio network temporary identifier, RNTI, that corresponds to the at least one target beam indicated by the at least one transmission configuration indicator, TCI, index.

13. The network apparatus (10) according to claim 12, wherein the at least one other medium access control control element, MAC CE, is configured to indicate at least one change related to at least one physical uplink shared channel, PUSCH, power control, at least one physical uplink control channel, PUCCH, power control, or at least one sounding reference signal, SRS, power control.

14. The network apparatus (10) according to any of claims 12-13, wherein the at least one a group radio network temporary identifier, RNTI, and user index combination is associated with at least one beam to which the at least one serving beam is changed.

15. The network apparatus (10) according to claim 12, further comprising:
means for providing the at least one transmission configuration indicator, TCI, state list configuration prior to providing the at least one other medium access control control element, MAC CE,
wherein the at least one transmission configuration indicator, TCI, state list configuration comprises information that identifies the at least one group radio network temporary identifier, RNTI, that corresponds to the at least one target beam indicated by the at least one transmission configuration indicator, TCI index.

16. The network apparatus (10) according to claim 15, wherein the at least one target beam comprises at least one beam to which the at least one serving beam is changed.

## Patentansprüche

1. Teilnehmereinrichtung (20), die Folgendes umfasst:
Mittel zum Empfangen von mindestens einem von Folgendem:
mindestens einer Kombination aus einer temporären Gruppenfunknetzwerkkennung, RNTI, und einem Benutzerindex in einem Medienzugangssteuerungssteuerelement, MAC CE, oder
mindestens einer temporären Gruppenfunknetzwerkkennung, RNTI, die mindestens einem Zielstrahl entspricht, der von mindestens einem Übertragungsauslegungsindikator(TCI)-Index in mindestens einer Übertragungsauslegungsindikator(TCI)-Zustandslistenauslegung angezeigt wird;
Mittel zum Empfangen von mindestens einem weiteren Medienzugangssteuerungssteuerelement, MAC CE, das mindestens eine Übertragungsauslegungsindikator(TCI)-Zustandsanzeige für einen physischen Downlinksteuerkanal, PDCCH, umfasst, der mindestens eine Änderung bei mindestens einem bedienenden Strahl anzeigt;
Mittel zum Auswählen von mindestens einem von Folgendem auf Basis der mindestens einen Änderung bei dem mindestens einen bedienenden Strahl:
der mindestens einen Kombination aus einer temporären Gruppenfunknetzwerkkennung, RNTI, und dem Benutzerindex oder
der mindestens einen temporären Gruppenfunknetzwerkkennung, RNTI, die mindestens dem einen Zielstrahl entspricht, der von dem mindestens einen Übertragungsauslegungsindikator(TCI)-Index angezeigt wird; und
Mittel zum Bereitstellen von mindestens einer hybriden automatischen Wiederholungsanforderungs(HARQ)-Bestätigung, ACK, für das mindestens eine weitere Medienzugangssteuerungssteuerelement, MAC CE,
wobei die mindestens eine hybride automatische Wiederholungsanforderungs(HARQ)-Bestätigung, ACK, Informationen umfasst, die die mindestens eine Auswahl anzeigen.

2. Teilnehmereinrichtung (20) nach Anspruch 1, wobei die Mittel zum Auswählen ferner Folgendes umfassen:
Mittel zum Auswählen der mindestens einen Kombination aus einer temporären Gruppenfunknetzwerkkennung, RNTI, und einem Benutzerindex.

3. Teilnehmereinrichtung (20) nach Anspruch 2, wobei das mindestens eine weitere Medienzugangssteuerungssteuerelement, MAC CE, dazu ausgelegt ist, mindestens eine Änderung bei mindestens einer Leistungssteuerung eines gemeinsam verwendeten physischen Uplinkkanals, PUSCH, mindestens einer Leistungssteuerung eines physischen Uplinksteuerkanals, PUCCH, oder mindestens einer Leistungssteuerung eines Sondierungsreferenzsignals, SRS, anzuzeigen.

4. Teilnehmereinrichtung (20) nach Anspruch 2 oder 3 umfasst ferner Folgendes:
Mittel zum Ersetzen von mindestens einer zuvor ausgelegten Kombination aus einer temporären Gruppenfunknetzwerkkennung, RNTI, und einem Benutzerindex durch mindestens eine Kombination aus einer temporären Gruppenfunknetzwerkkennung, RNTI, und einem Benutzerindex, die in dem mindestens einen Medienzugangssteuerungssteuerelement, MAC CE, beinhaltet sind.

5. Teilnehmereinrichtung (20) nach einem der Ansprüche 2-4, wobei die mindestens eine hybride automatische Wiederholungsanforderungs(HARQ)-Bestätigung, ACK, Informationen umfasst, die eine Strahländerung an dem mindestens einen Zielstrahl bestätigen und dass die mindestens eine Kombination aus der temporären Gruppenfunknetzwerkkennung, RNTI, und dem Benutzerindex in Gebrauch ist.

6. Teilnehmereinrichtung (20) nach einem der Ansprüche 2-5, die ferner Folgendes umfasst:
Mittel zum Empfangen von mindestens einem Strahl;
Mittel zum Bereitstellen von mindestens einem Messbericht, der Informationen beinhaltet, die mindestens eine Messung des mindestens einen Strahls identifizieren; und
wobei das mindestens eine Medienzugangssteuerungssteuerelement, MAC CE, und das mindestens eine weitere Medienzugangssteuerungssteuerelement, MAC CE, nach Bereitstellen des mindestens einen Messberichts empfangen werden.

7. Teilnehmereinrichtung (20) nach einem der Ansprüche 2-6, wobei die mindestens eine Kombination aus einer temporären Gruppenfunknetzwerkkennung, RNTI, und einem Benutzerindex mit mindestens einem Strahl verknüpft ist, in den sich der mindestens eine bedienende Strahl geändert hat.

8. Teilnehmereinrichtung (20) nach Anspruch 1, wobei die Mittel zum Auswählen ferner Folgendes umfassen:
Mittel zum Auswählen der temporären Gruppenfunknetzwerkkennung, RNTI, die dem mindestens einen Zielstrahl entspricht, der von dem mindestens einen Übertragungsauslegungsindikator(TCI)-Index angezeigt wird.

9. Teilnehmereinrichtung (20) nach Anspruch 8, die ferner Folgendes umfasst:
Mittel zum Ersetzen von mindestens einer zuvor ausgelegten temporären Gruppenfunknetzwerkkennung, RNTI, durch die mindestens eine temporäre Gruppenfunknetzwerkkennung, RNTI, die in der mindestens einen Übertragungsauslegungsindikator(TCI)-Zustandslistenauslegung beinhaltet ist, wobei die mindestens eine temporäre Gruppenfunknetzwerkkennung, RNTI, dem mindestens einen Übertragungsauslegungsindikator, TCI, entspricht, der mit dem mindestens einen Zielstrahl verknüpft ist.

10. Teilnehmereinrichtung (20) nach Anspruch 8 oder 9, wobei die eine hybride automatische Wiederholungsanforderungs(HARQ)-Bestätigung, ACK, Informationen umfasst, die eine Strahländerung an dem mindestens einen Zielstrahl bestätigen und dass die mindestens eine temporäre Gruppenfunknetzwerkkennung, RNTI, in Gebrauch ist.

11. Teilnehmereinrichtung (20) nach einem der Ansprüche 8-10, wobei der mindestens eine Zielstrahl mindestens einen Strahl umfasst, in den der mindestens eine bedienende Strahl geändert wird.

12. Netzwerkeinrichtung (10), die Folgendes umfasst:
Mittel zum Bereitstellen von mindestens einem von Folgendem:
mindestens einer Kombination aus einer temporären Gruppenfunknetzwerkkennung, RNTI, und einem Benutzerindex in einem Medienzugangssteuerungssteuerelement, MAC CE, oder
mindestens einer temporären Gruppenfunknetzwerkkennung, RNTI, die mindestens einem Zielstrahl entspricht, der von mindestens einem Übertragungsauslegungsindikator(TCI)-Index in mindestens einer Übertragungsauslegungsindikator(TCI)-Zustandslistenauslegung angezeigt wird;
Mittel zum Bereitstellen von mindestens einem weiteren Medienzugangssteuerungssteuerelement, MAC CE, das mindestens eine Übertragungsauslegungsindikator(TCI)-Zustandsanzeige für einen physischen Downlinksteuerkanal, PDCCH, umfasst, der mindestens eine Änderung bei mindestens einem bedienenden Strahl anzeigt; und
Mittel zum Empfangen von mindestens einer hybriden automatischen Wiederholungsanforderungs(HARQ)-Bestätigung, ACK, für das mindestens eine weitere Medienzugangssteuerungssteuerelement, MAC CE,
wobei die mindestens eine hybride automatische Wiederholungsanforderungs(HARQ)-Bestätigung, ACK, Informationen umfasst, die mindestens eines von Folgendem anzeigen:
der mindestens einen Kombination aus einer temporären Gruppenfunknetzwerkkennung, RNTI, und dem Benutzerindex oder
der mindestens einen temporären Gruppenfunknetzwerkkennung, RNTI, die mindestens dem einen Zielstrahl entspricht, der von dem mindestens einen Übertragungsauslegungsindikator(TCI)-Index angezeigt wird.

13. Netzwerkeinrichtung (10) nach Anspruch 12, wobei das mindestens eine weitere Medienzugangssteuerungssteuerelement, MAC CE, dazu ausgelegt ist, mindestens eine Änderung anzuzeigen, die sich auf mindestens eine Leistungssteuerung eines gemeinsam verwendeten physischen Uplinkkanals, PUSCH, mindestens eine Leistungssteuerung eines physischen Uplinksteuerkanals, PUCCH, oder mindestens eine Leistungssteuerung eines Sondierungsreferenzsignals, SRS, bezieht.

14. Netzwerkeinrichtung (10) nach einem der Ansprüche 12-13, wobei die mindestens eine Kombination aus einer temporären Gruppenfunknetzwerkkennung, RNTI, und einem Benutzerindex mit mindestens einem Strahl verknüpft ist, in den sich der mindestens eine bedienende Strahl geändert hat.

15. Netzwerkeinrichtung (10) nach Anspruch 12, die ferner Folgendes umfasst:
Mittel zum Bereitstellen der mindestens einen Übertragungsauslegungsindikator(TCI)-Zustandslistenauslegung vor dem Bereitstellen des mindestens einen weiteren Medienzugangssteuerungssteuerelements, MAC CE,
wobei die mindestens eine Übertragungsauslegungsindikator(TCI)-Zustandslistenauslegung Informationen umfasst, die die mindestens eine temporäre Gruppenfunknetzwerkkennung, RNTI, identifizieren, die dem mindestens einen Zielstrahl entspricht, der von dem mindestens einen Übertragungsauslegungsindikator(TCI)-Index angezeigt wird.

16. Netzwerkeinrichtung (10) nach Anspruch 15, wobei der mindestens eine Zielstrahl mindestens einen Strahl umfasst, in den der mindestens eine bedienende Strahl geändert wird.

## Revendications

1. Équipement utilisateur (20), comprenant :
des moyens pour recevoir au moins un parmi :
au moins un identifiant temporaire de réseau radio de groupe, RNTI, et une combinaison d'indice d'utilisateur dans un élément de commande de contrôle d'accès au support, CE de MAC, ou
au moins un identifiant temporaire de réseau radio de groupe, RNTI, qui correspond à au moins un faisceau cible indiqué par au moins un indice d'indicateur de configuration de transmission, TCI, dans au moins une configuration de liste d'état d'indicateur de configuration de transmission, TCI ;
des moyens pour recevoir au moins un autre élément de commande de contrôle d'accès au support, CE de MAC, qui comprend au moins une indication d'état d'indicateur de configuration de transmission, TCI, de canal de contrôle physique de liaison descendante, PDCCH, qui indique au moins un changement d'au moins un faisceau de desserte ;
des moyens pour sélectionner, sur la base de l'au moins un changement de l'au moins un faisceau de desserte, au moins un parmi :
l'au moins un identifiant temporaire de réseau radio de groupe, RNTI, et la combinaison d'indice d'utilisateur, ou
l'au moins un identifiant temporaire de réseau radio de groupe, RNTI, qui correspond à l'au moins un faisceau cible indiqué par l'au moins un indice d'indicateur de configuration de transmission, TCI ; et
des moyens pour fournir au moins un accusé de réception, ACK, de demande de répétition automatique hybride, HARQ, pour l'au moins un autre élément de commande de contrôle d'accès au support, CE de MAC,
dans lequel l'au moins un accusé de réception, ACK, de demande de répétition automatique hybride, HARQ, comprend des informations indiquant l'au moins une sélection.

2. Équipement utilisateur (20) selon la revendication 1, dans lequel les moyens de sélection comprennent en outre :
des moyens pour sélectionner l'au moins un identifiant temporaire de réseau radio de groupe, RNTI, et la combinaison d'indice d'utilisateur.

3. Équipement utilisateur (20) selon la revendication 2, dans lequel l'au moins un autre élément de commande de contrôle d'accès au support, CE de MAC, est configuré pour indiquer au moins un changement dans au moins une commande de puissance de canal physique partagé de liaison montante, PUSCH, au moins une commande de puissance de canal physique de contrôle de liaison montante, PUCCH, ou au moins une commande de puissance de signal de référence de sondage, SRS.

4. Équipement utilisateur (20) selon les revendications 2 ou 3 comprenant en outre :
des moyens pour remplacer au moins un identifiant temporaire de réseau radio de groupe, RNTI, précédemment configuré et une combinaison d'indice d'utilisateur par l'au moins un identifiant temporaire de réseau radio de groupe, RNTI, et la combinaison d'indice d'utilisateur inclus dans l'au moins un élément de commande de contrôle d'accès au support, CE de MAC.

5. Équipement utilisateur (20) selon l'une des revendications 2 à 4, dans lequel l'au moins un accusé de réception, ACK, de demande de répétition automatique hybride, HARQ, comprend des informations accusant réception d'un changement de faisceau de l'au moins un faisceau cible, et selon lesquelles l'au moins un identifiant temporaire de réseau radio de groupe, RNTI, et la combinaison d'indice d'utilisateur sont en cours d'utilisation.

6. Équipement utilisateur (20) selon l'une des revendications 2 à 5 comprenant en outre :
des moyens pour recevoir au moins un faisceau ;
des moyens pour fournir au moins un rapport de mesure qui comporte des informations identifiant au moins une mesure de l'au moins un faisceau ; et
dans lequel l'au moins un élément de commande de contrôle d'accès au support, CE de MAC, et l'au moins un autre élément de commande de contrôle d'accès au support, CE de MAC, sont reçus après la fourniture de l'au moins un rapport de mesure.

7. Équipement utilisateur (20) selon l'une des revendications 2 à 6, dans lequel l'au moins un identifiant temporaire de réseau radio de groupe, RNTI, et la combinaison d'indice d'utilisateur sont associés à au moins un faisceau auquel est passé l'au moins un faisceau de desserte.

8. Équipement utilisateur (20) selon la revendication 1, dans lequel les moyens de sélection comprennent en outre :
des moyens pour sélectionner l'identifiant temporaire de réseau radio de groupe, RNTI, qui correspond à l'au moins un faisceau cible indiqué par l'au moins un indice d'indicateur de configuration de transmission, TCI.

9. Équipement utilisateur (20) selon la revendication 8 comprenant en outre :
des moyens pour remplacer au moins un identifiant temporaire de réseau radio de groupe, RNTI, précédemment configuré par l'au moins un identifiant temporaire de réseau radio de groupe, RNTI, inclus dans l'au moins une configuration de liste d'état d'indicateur de configuration de transmission, TCI, dans lequel l'au moins un identifiant temporaire de réseau radio de groupe, RNTI, correspond à l'au moins un indicateur de configuration de transmission, TCI, associé à l'au moins un faisceau cible.

10. Équipement utilisateur (20) selon les revendications 8 ou 9, dans lequel l'accusé de réception, ACK, de demande de répétition automatique hybride, HARQ, comprend des informations accusant réception d'un changement de faisceau de l'au moins un faisceau cible, et selon lesquelles l'au moins un identifiant temporaire de réseau radio de groupe, RNTI, est en cours d'utilisation.

11. Équipement utilisateur (20) selon l'une des revendications 8 à 10, dans lequel l'au moins un faisceau cible comprend au moins un faisceau auquel l'au moins un faisceau de desserte est en train de passer.

12. Appareil de réseau (10), comprenant :
des moyens pour fournir au moins l'un parmi :
au moins un identifiant temporaire de réseau radio de groupe, RNTI et une combinaison d'indice d'utilisateur dans un élément de commande de contrôle d'accès au support, CE de MAC, ou
au moins un identifiant temporaire de réseau radio de groupe, RNTI, qui correspond à au moins un faisceau cible indiqué par au moins un indice d'indicateur de configuration de transmission, TCI, dans au moins une configuration de liste d'état d'indicateur de configuration de transmission, TCI ;
des moyens pour fournir au moins un autre élément de commande de contrôle d'accès au support, CE de MAC, qui comprend au moins une indication d'état d'indicateur de configuration de transmission, TCI, de canal de contrôle physique de liaison descendante, PDCCH, qui indique au moins un changement d'au moins un faisceau de desserte ; et
des moyens pour recevoir au moins un accusé de réception, ACK, de demande de répétition automatique hybride, HARQ, pour l'au moins un autre élément de commande de contrôle d'accès au support, CE de MAC,
dans lequel l'au moins un accusé de réception, ACK, de demande de répétition automatique hybride, HARQ, comprend des informations indiquant au moins un parmi :
l'au moins un identifiant temporaire de réseau radio de groupe, RNTI, et la combinaison d'indice d'utilisateur, ou
l'au moins un identifiant temporaire de réseau radio de groupe, RNTI, qui correspond à l'au moins un faisceau cible indiqué par l'au moins un indice d'indicateur de configuration de transmission, TCI.

13. Appareil de réseau (10) selon la revendication 12, dans lequel l'au moins un autre élément de commande de contrôle d'accès au support, CE de MAC, est configuré pour indiquer au moins un changement lié à au moins une commande de puissance de canal physique partagé de liaison montante, PUSCH, au moins une commande de puissance de canal physique de contrôle de liaison montante, PUCCH, ou au moins une commande de puissance de signal de référence de sondage, SRS.

14. Appareil de réseau (10) selon l'une des revendications 12 et 13, dans lequel l'au moins un identifiant temporaire de réseau radio de groupe, RNTI, et la combinaison d'indice d'utilisateur sont associés à au moins un faisceau auquel est passé l'au moins un faisceau de desserte.

15. Appareil de réseau (10) selon la revendication 12, comprenant en outre :
des moyens pour fournir l'au moins une configuration de liste d'état d'indicateur de configuration de transmission, TCI, avant de fournir l'au moins un autre élément de commande de contrôle d'accès au support, CE de MAC,
dans lequel l'au moins une configuration de liste d'état d'indicateur de configuration de transmission, TCI, comprend des informations qui identifient l'au moins un identifiant temporaire de réseau radio de groupe, RNTI, qui correspond à l'au moins un faisceau cible indiqué par l'au moins un indice d'indicateur de configuration de transmission, TCI.

16. Appareil de réseau (10) selon la revendication 15, dans lequel l'au moins un faisceau cible comprend au moins un faisceau auquel est passé l'au moins un faisceau de desserte.
